# EUROPÄISCHE PATENTSCHRIFT

(11) **EP 3 336 735 B1**
(45) Veröffentlichungstag und Bekanntmachung des Hinweises auf die Patenterteilung: **18.09.2019**
(21) Anmeldenummer: 17207437.9
(22) Anmeldetag: 14.12.2017
(51) Int. Cl.: G06F 21/32, H04L 29/06

(54) **ERSTELLEN EINER DATENBANK FÜR EINE DYNAMISCHE MULTIFAKTORAUTHENTIFIZIERUNG**
CREATION OF A DATABASE FOR DYNAMIC MULTI-FACTOR AUTHENTICATION
CRÉATION D'UNE BASE DE DONNÉES POUR UNE AUTHENTIFICATION MULTIFACTORIELLE DYNAMIQUE

(30) Priorität: 16.12.2016 DE 102016225355
(43) Veröffentlichungstag der Anmeldung: 20.06.2018
(73) Patentinhaber: Bundesdruckerei GmbH, 10969 Berlin (DE)
(72) Erfinder: DIETRICH, Frank, 12437 Berlin (DE); SEEGEBARTH, Christian, 20249 Hamburg (DE)
(74) Vertreter: Richardt Patentanwälte PartG mbB

(56) Entgegenhaltungen:
- EP-A1- 2 285 067
- EP-A1- 2 901 353
- WO-A1-2016/113521

## Beschreibung

Die Erfindung betrifft ein Verfahren zum Erstellen einer Datenbank für eine Authentifizierung eines Nutzers, insbesondere für eine dynamische Multifaktorauthentifizierung, sowie ein Computersystem zur Ausführung des Verfahrens.

Aus dem Stand der Technik sind Zwei-Faktor-Authentifizierungsverfahren bekannt. Eine solche Zwei-Faktor-Authentifizierung dient der Authentifizierung eines Nutzers mittels der Kombination zweier verschiedener und insbesondere unabhängiger Komponenten, auch Faktoren genannt. Diese Faktoren können beispielsweise bereitgestellt werden in Form eines Gegenstandes, der sich im Besitz des Nutzers befindet, in Form von Wissen, welches nur der Nutzer hat, oder in Form eines Merkmals, welches untrennbar mit dem Nutzer verbunden ist. Ein entsprechender Gegenstand kann beispielsweise eine Bankkarte sein, entsprechendes Wissen kann beispielsweise ein Benutzername oder ein Kennwort sein und ein entsprechendes untrennbar mit dem Nutzer verbundenes Merkmal kann beispielsweise ein Fingerabdruck sein. Aus dem Alltag ist ein solches Zwei-Faktor-Authentifizierungsverfahren beispielsweise von Geldautomaten bekannt, bei welchen der Nutzer sich zum Geldabheben durch die Kombination aus einer Bankkarte und einer PIN authentisieren muss.

Bekannte Zwei-Faktor-Authentifizierungsverfahren haben jedoch den Nachteil, dass sie statisch sind, d.h. stets dieselbe Kombination von Faktoren geprüft wird. Dies führt bei lediglich zwei Faktoren dazu, dass das Verfahren anfällig ist gegenüber Manipulationsversuchen, insbesondere Diebstahl.

Der Erfindung liegt demgegenüber die Aufgabe zugrunde, ein effizientes, flexibles und sicheres Verfahren zur Authentifizierung eines Nutzers zu ermöglichen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen Verfahren zum Erstellen einer Datenbank für eine dynamische Multifaktorauthentifizierung eines Nutzers. Das Verfahren umfasst:
- initiale Registrierung des Nutzers gegenüber einem Authentifizierungsdienst, welcher die Datenbank verwaltet,
- Anmelden von Sensorgeräten von welchen Daten für den Authentifizierungsdienst erfasst und in der Datenbank als Grundlage für eine dynamische Multifaktorauthentifizierung gesammelt werden,
- Empfang kryptographisch gesicherter Daten von den Sensorgeräten,
- kryptographisch gesichertes Speichern der Daten in der Datenbank,
- Extrahieren von Merkmalskombinationen und von den Merkmalen der Merkmalskombination zugeordneten Referenzwerten aus den gespeicherten Daten, welche für den Nutzer charakteristisch sind,
- Zuordnen von Vertrauensniveaus zu den einzelnen Merkmalskombinationen basierend auf einer statistischen Wahrscheinlichkeit dafür, dass ein anderer Nutzer eine identische Merkmalskombination mit identischen Referenzwerten aufweist,
- auf einen Empfang einer Authentifizierungsanfrage hin dynamische Auswahl einer Merkmalskombination, welche der Nutzer für eine erfolgreiche Authentifizierung nachzuweisen hat, unter Verwendung der den Merkmalkombinationen zugeordneten Vertrauensniveaus.

Ausführungsformen können den Vorteil haben, dass sie eine Datenbank für eine dynamische Multifaktorauthentifizierung bereitstellen. Unter einer "Datenbank" wird hier allgemein eine Zusammenstellung von Daten in Form von Datenbankeinträgen gemäß einer festgelegten Organisationsstruktur der Datenbank verstanden. Eine Datenbank kann zudem ein Verwaltungsprogramm zum Verwalten der Datenbank umfassen. Unter einer kryptographisch gesicherten Datenbank wird eine Datenbank verstanden, deren Einträge kryptographisch gesichert sind. Beispielsweise umfasst die Datenbank verschlüsselte und/oder signierte Daten. Unter einer kryptographisch gesicherten Datenbank wird beispielsweise auch eine Blockchain verstanden.

Unter einer dynamischen Multifaktorauthentifizierung wird hier und im Folgenden eine Multifaktorauthentifizierung bei der die Art und Anzahl der Faktoren in Abhängigkeit von dem jeweils erforderlichen Authentifizierungsgrad für jede Authentifizierungsanfrage dynamisch festgelegt wird. Das Verfahren ist also in dem Sinne dynamisch, dass die Auswahl der für eine erfolgreiche Authentifizierung des Nutzers nachzuweisende Kombination von Merkmalen auf den Empfangen der Authentifizierungsanfrage hin erfolgt. Die Auswahl ist mithin nicht statisch vorgegeben, sondern erfolgt für jede Authentifizierungsanfrage individuell. Insbesondere kann die Auswahl für identische Authentifizierungsanfragen unterschiedlich sein. Dies erhöht die Sicherheit des Verfahren. Selbst wenn die bei einer ersten Authentifizierungsanfrage zur erfolgreichen Authentifizierung notwendigen Messwerte durch Diebstahl und/oder Manipulation in die Hände eines unberechtigten gelangen sollten, kann dieser sich selbst bei einer identischen Authentifizierungsanfrage nicht erfolgreich Authentifizieren, wenn sich die nachzuweisende Kombination von Merkmalen dynamisch ändert.

Der Begriff "Authentifizierungsdienst" wird ein Dienst verstanden, welcher in Form eines Programms in einem Computersystem, d.h. einem "Authentifizierungsdienst-Computersystem" implementiert ist. Der Authentifizierungsdienst bzw. das Authentifizierungsdienst-Computersystem mit dem darauf implementierten Authentifizierungsdienst-Programm, ist dazu konfiguriert eine Datenbank für eine Multifaktorauthentifizierung zu erstellen und für die Multifaktorauthentifizierung bereitzustellen. Ferner ist Authentifizierungsdienst-Computersystem dazu konfiguriert, einen Nutzer unter Verwendung einer dynamischen Multifaktorauthentifizierung zu authentifizieren und eine erfolgreiche Authentifizierung durch erzeugen eines Authentifizierungstokens zu bestätigen. Zudem kann das Authentifizierungsdienst-Computersystem auch als ID-Provider-Computersystem über Attribute des Nutzers verfügen und diese auf eine erfolgreiche Authentifizierung des Nutzers hin zusammen mit dem Authentifizierungstoken bereitstellen. Zu diesem Zweck umfasst der Authentifizierungstoken beispielsweise ein dem Nutzer zugeordnetes Attribut bzw. Daten, welche den Nutzer oder eine Eigenschaft des Nutzers identifizieren. Ferner bestätigt der Authentifizierungstoken, beispielsweise durch eine Signatur des Authentifizierungsdienst-Computersystem, die erfolgreiche Authentifizierung des Nutzers sowie die Zuordnung des Attributs zu dem authentifizierten Nutzer. Schließlich kann der Authentifizierungstoken noch weitere Informationen über den Nutzer und/oder den Authentifizierungsvorgang umfassen.

Bei einem entsprechenden Attribut kann es sich beispielsweise um eine Angabe bezüglich der Identität des authentifizierten Nutzers handeln, insbesondere bezüglich dessen digitaler Identität. Attribute können beispielsweise umfassen: Name, Vorname und/oder Adresse. Ein Attribut kann alternativer Weise aber auch nicht der Feststellung der Identität des Nutzers, sondern beispielsweise zur Überprüfung der Berechtigung des Benutzers zur Inanspruchnahme eines bestimmten Dienstes und/oder Funktionalität dient, wie zum Beispiel das Alter des Nutzers oder ein anderes Attribut, welches die Zugehörigkeit des Nutzers zu einer bestimmten Gruppe dokumentiert mit bestimmten Berechtigungen.

Unter einem "Computer" wird hier ein Gerät verstanden, welches mittels programmierbarer Rechenvorschriften Daten verarbeitet. Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Ein Computer bzw. Computersystem kann eine Schnittstelle zur Verbindung mit dem Netzwerk umfassen, wobei es sich bei dem Netzwerk um ein privates oder öffentliches Netzwerk handeln kann, insbesondere das Internet, ein Energieversorgungsnetz oder ein anderes Kommunikationsnetz. Je nach Ausführungsform kann diese Verbindung auch über ein Mobilfunknetz hergestellt werden.

Der Authentifizierungsdienst-Computersystem kann eindeutig einem bestimmten Nutzer zugeordnet sein. In diesem Fall ist Authentifizierungsdienst-Computersystem derart konfiguriert, dass es genau einen Nutzer zu Authentifizieren vermag. In diesem Fall kann der Authentifizierungsdienst dazu konfiguriert sein genau eine Datenbank für den genau einen Nutzer zu erstellen. Nach weiteren Ausführungsformen ist das Authentifizierungsdienst-Computersystem dazu konfiguriert verschiedene Nutzer einer Mehrzahl von Nutzern zu identifizieren. In diesem Fall kann der Authentifizierungsdienst dazu konfiguriert sein eine Mehrzahl von Datenbanken zu erstellen, wobei jede Datenbank beispielsweise einem Nutzer zugeordnet ist. Nach weiteren Ausführungsformen umfassen die ein oder mehreren Datenbank Daten einer Mehrzahl von Nutzern. Nach Ausführungsformen sind die Daten verschiedener Nutzer voneinander unabhängig kryptographische gesichert. Mit anderen Worten erlaubt ein Zugriff auf die Daten eines Nutzers nicht automatisch einen Zugriff auf die Daten eines anderen Nutzers. Beispielsweise sind die Daten mit unterschiedlichen Passwörtern verschlüsselt.

Bei dem Authentifizierungsdienst-Computersystem kann es sich ferner um ein lokales Authentifizierungsdienst-Computersystem handeln, welches dazu konfiguriert ist Nutzer des Authentifizierungsdienst-Computersystem zu identifizieren. Mit anderen Worten kann der Authentifizierungsdienst auf einem Nutzer-Computersystem implementiert sein, wodurch das Nutzer-Computersystem zugleich zum Authentifizierungsdienst-Computersystem wird. Ferner kann es sich bei dem Authentifizierungsdienst-Computersystem um ein zentrales Computersystem eines zentralen Authentifizierungsdienstes handeln, welcher zur Authentifizierung einer Mehrzahl von Nutzern an einer Mehrzahl von Nutzer-Computersystemen konfiguriert ist.

Bei einem Authentifizierungsdienst-Computersystem kann es sich beispielsweise um ein mobiles Telekommunikationsgerät, insbesondere ein Smartphone, einen tragbaren Computer, wie zum Beispiel einen Laptop oder Palmtop-Computer, einen Personal Digital Assistant oder dergleichen handeln. Ferner kann es sich um ein stationäres Computersystem, wie beispielsweise einen Personalcomputer oder einen in einer Client-Server-Umgebung eingebundenen Server handeln.

Unter einem "Sensor" wird hier ein Element zum Erfassen von Messdaten verstanden. Messdaten sind Daten, welche physikalische oder chemische Eigenschaften eines Messobjekts, wie beispielsweise Wärmemenge, Temperatur, Feuchtigkeit, Druck, Schallfeldgrößen, elektromagnetische Feldstärke, Helligkeit, Beschleunigung, Lageänderung, pH-Wert, lonenstärke, elektrochemisches Potential, und/oder dessen stoffliche Beschaffenheit qualitativ oder quantitativ wiedergeben. Messdaten werden mittels physikalischer oder chemischer Effekte erfasst und in ein elektronisch weiterverarbeitbares elektrisches Signal umgeformt. Ferner können Messdaten, Zustände und/oder Zustandsänderung von elektronischen Geräten bzw. in Folge einer Benutzung durch einen Nutzer wiedergeben.

Sensoren können von Sensorgeräten bereitgestellt werden, welche die Sensoren umfassen. Bei den entsprechenden Sensorgeräten handelt es sich um elektronische Geräten, welche zumindest einen Sensor umfassen und informationstechnisch aufgerüstet sind, sodass sie erfasste Messwerte dem ID-Provider-Computersystem zur Verfügung stellen können.

Insbesondere kann es sich bei den Sensorgeräten um tragbare elektronische Geräte handeln. Beispielsweise handelt es sich um sog. "wearables" bzw. "wearable computers", d.h. tragbare elektronische Geräte bzw. tragbare Computersysteme, welche während der Anwendung am Körper des Nutzers angeordnet sind. Beispiele für Wearables sind Smartwatches, d.h. Uhren mit Computerfunktionalität und - konnektivität, Activity Tracker, d.h. Gerät zur Aufzeichnung und Versendung fitness- und/oder gesundheitsrelevanter Daten, Smartglasses, d.h. Brillen, deren Innenseiten als Bildschirm dienen, oder Kleidungsstücke, in die elektronische Hilfsmittel zur Kommunikation eingearbeitet sind.

Ferner kann es sich bei einem Sensorgerät um einen tragbaren Computer handeln, wie zum Beispiel einen Laptop oder Palmtop-Computer, einen Personal Digital Assistant, ein mobiles Telekommunikationsgerät, insbesondere ein Smartphone, oder dergleichen handeln. Nach weiteren Ausführungsformen kann es sich bei den Sensorgeräten auch um ein mit einem Computersystem ausgestattetes Fortbewegungsmittel, wie etwa ein Auto, Flugzeug, Schiff oder Zug mit Bordcomputer, handeln.

Nach weiteren Ausführungsformen kann es sich bei einem Sensorgerät um eine stationären Computer handeln, dessen bestimmungsgemäßer Gebrauch ortsfest erfolgt, wie etwa ein Personalcomputer, ein Server, ein Steuercomputer eines Smarthome-Systems, ein Access Point oder Router eines lokales WLAN-Netzwerks, ein Multimediagerät mit Computerfunktionalität und -konnektivität, wie etwa ein Smart-TV, ein Steuersystem einer Schließanlage oder ein "smart device" bzw. intelligenter Gegenstände, d.h. ein informationstechnisch aufgerüstete Alltagsgegenstände, welcher einen Mehrwert durch sensorgestützte Informationsverarbeitung und Kommunikation erhält.

Nutzer umgeben sich im Alltag in immer höherem Maße mit elektronischen Geräten, welche Computerfunktionalität und -konnektivität aufweisen. Ein Trend ist die zunehmende Verbreitung von Wearables, d.h. Computersystemen, die während der Anwendung am Körper des Nutzers angeordnet sind. Ein weiterer Trend ist das Ersetzen von Gegenstände des Alltags durch "intelligente Gegenstände" (auch "smart devices" genannt), welche informationstechnisch aufgerüstete und dazu konfiguriert sind selbst Informationen zu verarbeiten. Diese intelligenten Gegenstände sind mit datenverarbeitender Hardware ausgerüstet, wie etwa einem eingebauten Mikrocontroller, Kommunikationsschnittstellen und/oder Sensoren, sodass sie Daten erfassen, speichern und/oder untereinander austauschen können. Ein Schlagwort für diese Entwicklung ist beispielsweise das sogenannte Internet der Dinge (abgekürzt auch IoT von "internet of things").

Merkmale, welche zu einer Authentifizierung eines Nutzers herangezogen und von dazu konfigurierten Sensoren erfasst werden können, können beispielsweise Daten sein, welche dem Nutzer zugordnet sind und/oder welche allein dem Nutzer bekannt sind oder einem Gegenstand, beispielsweise einem ID-Token entnehmbar sind, welchen der Nutzer besitzt. Solche Merkmale können beispielsweise Benutzername, Passwort, Einmalpasswort (dynamisch generiert oder einer Passwortliste bzw. TAN-Liste entnehmbar), Persönliche Identifikationsnummer (PIN), Kartennummer, Zeichenfolge, wie beispielsweise eine Antwort auf eine Sicherheitsfrage, Signatur, kryptographischer Schlüssel beispielsweise zusammen mit einem Zertifikat, Geräteidentifikator, eine IP-Adresse oder Universally Unique Identifier (UUID) eines Geräts sein.

Der Begriff "ID-Token" bezeichnet eine Vorrichtung, wie beispielsweise ein tragbares elektronisches Gerät, zum Beispiel einen sogenannten USB-Stick, eine Chipkarte, oder ein Dokument.

Unter einem "Dokument" wird insbesondere ein Ausweis-, Wert- oder Sicherheitsdokument, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Banknote, Bankkarte oder Kreditkarte, Frachtbrief oder ein sonstiger Berechtigungsnachweis verstanden. Insbesondere kann es sich bei dem ID-Token um ein Machine-Readable Travel Document, wie beispielsweise von der Internationalen Luftfahrtbehörde (ICAO) und/oder dem BSI standardisiert, handeln.

Ferner kann es sich bei einem Merkmal auch um ein biometrisches Merkmal handeln, wie beispielsweise Pulsfrequenz, Elektrokardiogramm-Signale, Elektroenzephalographie-Signale, spektrale Eigenschaften des menschlichen Gewebes, prozentuale Sauerstoffsättigung des Blutes, Blutfluss , Hämatokrit, biochemische Gewebeproben, elektrische Plethysmografie, Transpiration von Gasen, elektrische Eigenschaft der Haut, Blutdruck, Differenzialblutvolumen, Fingerabdruck, Unterschrift, Handschrift, Gesichtsgeometrie, Irismuster, Retina, Handgeometrie, Fingergeometrie, Venenstruktur der Hand, Ohrform, Stimme Klangfarbe, DNA, Geruch, Fußgeometrie, Gewicht, Länge der Extremitäten, Gestenmuster, Bewegungsmuster, Schrittmuster, Tippmuster, Streichmuster, Tastenanschlag.

Ferner kann es sich bei den Merkmalen um den Nutzer kennzeichnende Verhaltensmerkmale handeln, beispielsweise auf einem dem Nutzer zugeordneten Computer installierten Anwendungen, ein Synchronisationsmuster von dem Nutzer zugeordneten Computern und/oder Computeranwendungen, auf einem dem Nutzer zugeordneten Computer gespeicherten Kontakte, ein Nutzungsprofil eines Computers, ein Browsingmuster eines Nutzers mit einem Browser auf einem dem Nutzer zugeordneten Computer, Kontextinformationen wie etwa aus einem dem Nutzer zugeordneten elektronischen Kalender, ein Bewegungsprofil des Nutzer, ein Anrufmuster von Anrufen mittels eines dem Nutzer zugeordneten Telekommunikationsgeräts.

Daten können beispielsweise durch Verschlüsselung mit einem asymmetrischen Schlüsselpaar, d.h. einem privaten oder vorzugsweise einem öffentlichen kryptographischen Schlüssel, oder einem symmetrischen kryptographischen Schlüssel kryptographisch gesichert werden. Eine kryptographische Sicherung kann zusätzlich oder alternativ eine Signatur mit einem Signaturschlüssel, z.B. einem privaten kryptographischen Schlüssel eines asymmetrischen Schlüsselpaars.

Beispielsweise kann eine kryptographisch gesicherte Übertragung von Daten eine Übertragung über eine verschlüsselte Ende-zu-Ende-Verbindung umfassen. Unter einer "verschlüsselten Ende-zu-Ende-Verbindung" bzw. einem "verschlüsselten Ende-zu-Ende-Übertragungskanal" wird hier eine Verbindung zwischen einem Sender und einem Empfänger mit einer Ende-zu-Ende-Verschlüsslung verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, sodass Zwischenstationen aufgrund der Verschlüsslung keine Kenntnis vom Inhalt der übertragenen Daten erlagen können. Die Verbindung wird durch die Verschlüsselung kryptografisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptographischen Schlüsseln, wobei ein erster der symmetrischen Schlüssel zum Verschlüsseln von Nachrichten und ein zweiter der symmetrischen Schlüssel zum Authentifizieren des Senders der Nachricht dient.

Der Schlüssel zum Authentifizieren des Senders der Nachricht kann beispielsweise zum Erstellen eines Nachrichtenauthentifizierungscodes (Message Authentication Code, MAC) dienen. Mittels eines MAC lässt sich Gewissheit über den Ursprung der Nachrichten erhalten und deren Integrität verifizieren. MAC-Algorithmen erfordern zwei Eingabeparameter, erstens die zu schützenden Daten und zweitens einen geheimen Schlüssel. Aus diesen beiden wird ein Nachrichtenauthentifizierungscode in Form einer Prüfsumme berechnet. Der Sender einer Nachricht berechnet für die zu übermittelnden Daten der Nachricht einen MAC und sendet die Nachricht zusammen mit dem MAC an den Empfänger. Der Empfänger berechnet den MAC zu der empfangenen Nachricht mit seinem Schlüssel und vergleicht den berechneten MAC mit dem empfangenen MAC. Aus einer Übereinstimmung beider Werte folgt, dass die Nachricht von einer Partei abgeschickt wurde, welche Zugriff auf den geheimen Schlüssel besitzt und die Nachricht wurde während der Übertragung nicht verändert.

Unter einem "Zertifikat" wird hier ein digitales Zertifikat verstanden, welches auch als Public-Key-Zertifikat bezeichnet wird. Durch solche Zertifikate basierend auf asymmetrischen Schlüsselpaaren wird eine so genannte Public Key Infrastructure (PKI) realisiert. Bei einem solchen Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Ein Zertifikat kann beispielsweise einen öffentlichen Schlüssel beinhalten und signiert sein. Alternativ sind auch Zertifikate basierend auf zero-knowledge Kryptosystemen möglich. Beispielsweise kann das Zertifikat dem Standard X.509 oder einem anderen Standard entsprechen. Beispielsweise handelt es sich bei dem Zertifikat um ein CV-Zertifikat oder auch Card Verifiable Certificate (CVC). Eine Implementierung von solchen CVCs ist beispielsweise in der ISO/IEC 7816-8 spezifiziert.

Die PKI stellt ein System zum Ausstellen, Verteilen und Prüfen digitaler Zertifikate. Ein digitales Zertifikat dient in einem asymmetrischen Kryptosystem dazu die Authentizität eines öffentlichen Schlüssels und seinen zulässigen Anwendungs- und Geltungsbereich zu bestätigen. Das digitale Zertifikat ist selbst durch eine digitale Signatur geschützt, deren Echtheit mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des durch dieses Zertifikat zertifizierten Schlüssels, müssen sich die Teilnehmer der PKI ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Digitale Zertifikate sind bei der Absicherung elektronischer Kommunikation durch asymmetrische kryptographische Verfahren ein bewährtes Mittel um Berechtigungen nachzuweisen. Zertifikate sind strukturierte Daten, die die Authentizität und/oder weitere Eigenschaften/Berechtigungen des Eigentümers eines öffentlichen Schlüssels (Signaturprüfschlüssel) dokumentieren und durch eine unabhängige, glaubwürdige Instanz (Zertifizierungsdienstanbieter/ZDA oder Vertrauensdiensteanbieter/VDA), im Allgemeinen die das Zertifikat zuteilende Zertifizierungsstelle, bestätigen. Zertifikate werden in der Regel einem breiten Personenkreis zur Verfügung gestellt um diesem eine Prüfung elektronischer Signaturen auf Authentizität und Gültigkeit zu ermöglichen.

Ein Zertifikat kann einer elektronischen Signatur zugeordnet sein, wenn der zu dem öffentlichen Schlüssel gehörende private Schlüssel zur Generierung der zu prüfenden elektronischen Signatur verwendet wurde. Dadurch, dass ein ZDA ein Zertifikat in Assoziation mit einem öffentlichen Schlüssel der Allgemeinheit zur Verfügung stellt, ermöglicht ein ZDA den Nutzern asymmetrischer Kryptosysteme den öffentlichen Schlüssel einer Identität, beispielsweise einer Person, einer Organisation, einem Energie- oder Computersystem, zuzuordnen.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem öffentlichen Schlüssel, welcher zur Ver- und/oder Entschlüsselung von Daten verwendet wird und an Dritte, beispielsweise an einen Dienstanbieter und/oder einen ZDA, weitergegeben werden darf sowie einem privaten Schlüssel, welcher zur Ver- und/oder Entschlüsselung von Daten verwendet wird und im Regelfall geheim gehalten werden muss. Der öffentliche Schlüssel ermöglicht es jedermann, Daten für den Inhaber des privaten Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen. Eine mit einem privaten Schlüssel erstellte Signatur kann mit dem zugehörigen öffentlichen Schlüssel verifiziert werden.

Digitale Signaturen werden zum sicheren elektronischen Datenaustausch, beispielsweise im Internet, eingesetzt und ermöglichen die Prüfung von Identitäten und/oder Berechtigungen und der Unverfälschtheit der ausgetauschten Daten. Um dies zu gewährleisten, ist in der Regel eine Public-Key-Infrastruktur notwendig, die die Gültigkeit der verwendeten Schlüssel durch Zertifikate bestätigt.

Die Erstellung einer digitalen Signatur, im Folgenden auch lediglich als "Signatur" bezeichnet, ist ein kryptographisches Verfahren, bei dem zu beliebigen Daten, zum Beispiel einem elektronischen Dokument, ein weiterer Datenwert, welcher als "Signatur" bezeichnet wird, berechnet wird. Die Signatur kann zum Beispiel ein verschlüsselter Hashwert des elektronischen Dokuments sein, insbesondere ein Hashwert, welcher mit einem privaten Schlüssel eines kryptographischen Schlüsselpaares verschlüsselt ist, das einem Zertifikat zugeordnet ist. Die Besonderheit einer solchen Signatur besteht darin, dass deren Urheberschaft und Zugehörigkeit zu einer bestimmten Person oder Instanz durch jeden Dritten geprüft werden kann.

Ein Challenge-Response-Protokoll stellt ein sicheres Authentifizierungsverfahren auf Basis gemeinsamen bzw. geteilten Wissens da. Gemäß dem Challenge-Response-Protokoll schickt beispielsweise ein erster Teilnehmer einer zweiseitigen Kommunikation eine sogenannten Challenge (Aufforderung) an den zweiten Teilnehmer, die dieser lösen muss, um dadurch zu beweisen, dass ein bestimmtes Wissen verfügt, ohne dieses Wissen gegenüber Dritten preiszugeben. Nachdem der zweite Teilnehmer die Challenge gelöst hat, antwortet er mit einer Response (Antwort). Beispielsweise sendet der erste Teilnehmer als Challenge eine Zufallszahl N (Nonce) an den zweiten Teilnehmer. Der zweite Teilnehmer ergänzt diese Zufallszahl N um das gemeinsame Geheimnis, wendet eine kryptographische Hashfunktion oder Verschlüsselung auf diese Kombination an und sendet das Ergebnis als Response zurück an den ersten Teilnehmer. Der erste Teilnehmer, der sowohl die Zufallszahl als auch das gemeinsame geteilte Geheimnis und die verwendete Hashfunktion bzw. Verschlüsselung kennt, führt dieselbe Berechnung durch und vergleicht sein Ergebnis mit der Response. Sind das Ergebnis und die Response identisch, so hat sich der zweite Teilnehmer erfolgreich authentifiziert.

Unter einem "Speicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "flüchtigen elektronischen Speicher" wird hier ein Speicher zur vorübergehenden Speicherung von Daten, welcher dadurch gekennzeichnet ist, dass alle Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "geschützten Speicherbereich" wird hier ein Bereich eines elektronischen Speichers verstanden, auf den ein Zugriff, das heißt ein Lesezugriff oder ein Schreibzugriff, nur über einen Prozessor des Sicherheitsmoduls möglich ist. Nach Ausführungsformen ist der Zugriff von dem mit dem Speicher gekoppelten Prozessor nur dann möglich, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist. Unter einer Kommunikationsschnittstelle zur drahtlosen Kommunikation wird eine Kommunikationsschnittstelle, welche zum kontaktlosen Senden und Empfangen von Daten konfiguriert ist. Die Kommunikation kann beispielsweise nach einem RFID- und/oder NFC-Standard, wie etwa Bluetooth, erfolgen. Ferner kann die Kommunikationsschnittstelle zur Kommunikation über ein lokales Funknetz konfiguriert sein, beispielsweise nach einem Standard der IEEE-802.11-Familie und/oder Wi-Fi.

Eine Kommunikation kann beispielsweise über ein Netzwerk erfolgen. Unter einem "Netzwerk" wird hier jedes Übertragungsmedium mit einer Anbindung zur Kommunikation verstanden, insbesondere eine lokale Verbindung zwischen dem ID-Provider-Computersystem und dem Computersystem und/oder den Sensorgeräten oder ein lokales Netzwerk, insbesondere ein Local Area Network (LAN), ein privates Netzwerk, insbesondere ein Intranet, und ein virtuelles privates Netzwerk (Virtual Private Network - VPN). Beispielsweise kann das ID-Provider-Computersystem ebenso wie das Computersystem und/oder Sensorgeräte eine Standardfunkschnittstelle zur Anbindung an ein WLAN aufweisen, an die das ID-Provider-Computersystem und/oder das Computersystem und/oder Sensorgeräte zur Herstellung einer lokalen Verbindung für die Übertragung des Authentifizierungstokens angeschlossen sein kann. Ferner kann es sich um ein öffentliches Netzwerk, wie beispielsweise das Internet handeln.

Eine Merkmalskombination umfasst eine Mehrzahl von Merkmalen. Ein einer Merkmalskombination zugeordnetes Vertrauensniveau gibt beispielsweise die statistische Wahrscheinlichkeit wieder, dass ein anderer Nutzer als der zu authentifizierende Nutzer für dieselbe Merkmalskombination dieselben Referenzwerte aufweist, d.h. dass bei einer Authentifizierung für beide Nutzer dieselben Daten durch die Sensorgeräte erfasst werden. Nach Ausführungsformen berücksichtigt das Vertrauensniveau zudem die Messgenauigkeit mit welcher die Sensorgeräte Messwerte für die Merkmale der Merkmalskombination erfassen können. Je ungenauer ein Sensorgerät ein Merkmal messen kann, desto größer ist die Wahrscheinlichkeit, dass es für unterschiedliche Nutzer identische Referenzwerte ermittelt. Dadurch sinkt das Vertrauensniveau, da die Wahrscheinlichkeit zunimmt, dass ein anderer Nutzer als der zu authentifizierende Nutzer für dieselbe Merkmalskombination dieselben Referenzwerte aufweist.

Nach Ausführungsformen werden den Merkmalskombinationen jeweils Vertrauensniveaus in Form von Prozentsätzen zugeordnet. Nach Ausführungsformen werden Vertrauensniveaus in Form von Intervallen zugeordnet, wobei es sich bei den Intervallen um Intervalle gleicher oder variierender Länge handeln kann. Beispielsweise erfordert ein sehr hohes Vertrauensniveau eine Wahrscheinlichkeit von 95% bis 100%, dass ein zu authentifizierender Nutzer korrekt erkannt wird und authentifiziert wird, bzw. eine Wahrscheinlichkeit von 0% bis 5%, dass ein anderer Nutzer als der zu authentifizierende Nutzer für dieselbe Merkmalskombination dieselben Referenzwerte aufweist. Ein hohes Vertrauensniveau erfordert beispielsweise eine Wahrscheinlichkeit von 90% bis 95%, ein mittleres Vertrauensniveau beispielsweise eine Wahrscheinlichkeit von 75% bis 90% und ein niedriges Vertrauensniveau beispielsweise eine Wahrscheinlichkeit von 60% bis 75%.

Nach Ausführungsformen erfolgt die Registrierung direkt auf einem Nutzer-Computersystem, welches den Authentifizierungsdienst bereitstellt. Nach Ausführungsformen erfolgt die Registrierung durch ein zentrales Authentifizierungsdienst-Computersystem, welches über ein Netzwerk eine Registrierungsanfrage von einem Nutzer-Computersystem empfängt.

Nach Ausführungsformen sind die Sensorgeräte Bestandteile eines Nutzer-Computersystems. Nach Ausführungsformen handelt es sich bei den Sensorgeräten um eigenständige Geräte, welche über eine kontaktbehaftete oder kontaktlose Kommunikationsverbindung mit dem Nutzer-Computersystem verbunden sind. Nach weiteren Ausführungsformen sind die Sensorgeräte über eine kontaktbehaftete oder kontaktlose Kommunikationsverbindung direkt mit dem Authentifizierungsdienst-Computersystem verbunden. Die Kommunikationsverbindung wird beispielsweise über ein Netzwerk, wie etwa das Internet oder ein Intranet hergestellt. Bei der Kommunikationsverbindung handelt es sich beispielsweise um eine kryptographisch gesicherte Verbindung.

Die kryptographisch gesicherten Daten werden von dem Authentifizierungsdienst-Computersystem beispielsweise direkt von den Sensorgeräten empfangen. Nach weiteren Ausführungsformen werden die Sensordaten von einem Nutzer-Computersystem empfangen und an das Authentifizierungsdienst-Computersystem weitergeleitet.

Die Authentifizierungsanfrage wird beispielsweise von einem Dienst-Computersystem empfangen, welches einem Dienstanbieter zugeordnet ist. Der Dienstanbieter stellt einen Dienst bereit, welchen der Nutzer in Anspruch nehmen möchte. Ein solcher Dienst kann beispielsweise das Ausführen von Funktionalitäten, wie etwa mechanischer, elektrischer, elektronischer und/oder administrativer Art, umfassen. Beispielsweise handelt es sich bei dem Dienst-Computersystem um ein Terminal. Ein solches Terminal kann beispielsweise eine Schließanlage steuern, welche den Zugang zu einem gesicherten Bereich, wie etwa einem Gebäude, einem Stockwerk, einem Raum, oder einem Parkplatz, sichert. Ebenso kann das Terminal beispielsweise den Zugriff auf ein zentrales Steuerungssystem, wie etwa ein Smarthome-System, oder irgendeine anderes Computersystem, bereitstellen. Ferner kann es sich bei einem Terminal beispielsweise um ein Bankterminal handeln.

Nach weiteren Ausführungsformen handelt es sich bei dem Dienst-Computersystem um einen Server, von welchem ein Dienst bereitgestellt wird bzw. bei welchem der Dienst angefordert werden kann. Beispielsweise kann eine entsprechende Dienstanforderung, etwa von einem Nutzer-Computersystem, über ein Netzwerk, wie etwa das Internet oder ein Intranet, an das Dienst-Computersystem gesendet werden. Dienst-Computersystem ermöglicht beispielsweise eine Bestellung oder Reservierung eines Gutes oder es stellt IT-Ressourcen bereit, wie etwa einen Speicher, Software oder Daten. Beispielsweise stellt der Dienstanbieter eines oder mehrere der folgenden drei Dienstmodelle bereit: Infrastructure as a Service (IaaS), Platform as a Service (PaaS) und Software as a Service (SaaS). Im Falle von laaS bietet eine Rechnerwolke Nutzungszugang von virtualisierten Computerhardware-Ressourcen wie Rechnern, Netzen und Speicher. PaaS umfasst Nutzungszugang von Programmierungs- oder Laufzeitumgebungen mit flexiblen, dynamisch anpassbaren Rechen- und Datenkapazitäten. Im Fall von SaaS offeriert die Rechnerwolke Nutzungszugang von Software-Sammlungen und Anwendungsprogrammen. Anbieter von SaaS bieten eine Auswahl von Software, welche spezifisch die von ihnen bereitgestellte Infrastruktur abgestimmt ist und auf dieser läuft. SaaS wird auch als "Software on demand", d.h. Software bei Bedarf, bezeichnet.

Ebenso kann es sich bei dem Dienst-Computersystem beispielsweise um einen Server handeln, auf welchen über eine App auf einem mobilen Kommunikationsgerät, wie etwa ein Smartphone, zugegriffen werden kann, bzw. welcher Funktionalitäten der App, wie etwa Datenstreaming, ermöglicht.

Ausführungsformen können den Vorteil haben, dass für einen registrierten Nutzer über angemeldete Sensorgeräte Daten erfasst werden. Beispielsweise wird für einen registrierten Nutzer ein diesem zugeordnetes Nutzerprofil erstellt. Zum Schutz dieser den Nutzer betreffenden Daten gegenüber Missbrauch und/oder Manipulationen werden die Daten kryptographisch gesichert. Anhand der erfassten Daten werden für den Nutzer charakteristische Merkmalskombinationen extrahiert. Diesen Merkmalskombinationen werden Vertrauensniveaus zugeordnet. Die Datenbank kann somit eine Mehrzahl von Merkmalskombinationen für unterschiedliche Vertrauensniveaus, d.h. für unterschiedliche Sicherheitsstufen bzw. Sicherheitsanforderungen, bereitstellen.

Im Fall einer Authentifizierungsanfrage erfolgt eine dynamische Auswahl einer Merkmalskombination unter Verwendung der Vertrauensniveaus. Dies kann vorteilhaft sein, da sich die Merkmalskombinationen für eine Authentifizierung von Authentifizierungsanfrage zu Authentifizierungsanfrage unterscheiden können. Somit kann ein Missbrauch durch einen Angreifer, selbst wenn es ihm gelingen sollte ein oder mehrere Merkmale oder gar eine ganze Merkmalskombination auszusähen, effektiv verhindert werden. Für den Angreifer kann es beispielsweise nicht vorhersagbar sein, welche Merkmale bzw. Merkmalskombination für eine Authentifizierung, ausgewählt werden.

Durch die Zuordnung zu Vertrauensniveaus kann trotz dynamischer Auswahl der Merkmalskombinationen sichergestellt werden, dass die ausgewählte Kombination den für die Authentifizierung notwendigen Sicherheitsanforderungen genügt. Zugleich kann es durch die Verwendung unterschiedlicher Vertrauensniveaus ermöglicht werden, dass für individuelle Authentifizierungsanfragen ein individuell ausgewähltes oder vorgegebenes Vertrauensniveau verwendet wird.

Typischerweise erfordern Merkmalskombinationen mit einem höheren Vertrauensniveau entweder eine größere Anzahl an Merkmale mit jeweils einem niedrigeren Vertrauensniveau oder Merkmale mit jeweils einem individuell höheren Vertrauensniveau. Das Erfassen von Merkmalen mit einem höheren Vertrauensniveau ist aber typischerweise zeitaufwendiger und/oder komplexer als das erfassen eines Merkmales mit einem niedrigeren Vertrauensniveau. Dies liegt bereits daran, dass für ein höheres Vertrauensniveau eine präzisere Messung mit geringeren Messfehlern notwendig ist, wohingegen im Fall eines niedrigen Vertrauensniveaus auch die akzeptablen Messfehler größer sein dürfen. Andererseits erfordert eine Erfassung einer größeren Anzahl von Merkmalen, selbst wenn deren Vertrauensniveaus niedriger sind, ebenfalls mehr Zeit und/oder Aufwand.

Durch das Bereitstellen unterschiedlicher Vertrauensniveaus kann je nach Sicherheitsanforderung einer Authentifizierungsanfrage bzw. der Sicherheitsanforderung des Dienstes für den sich der Nutzer authentifizieren möchte bzw. authentifiziert werden soll, so ausgewählt werden, dass das Vertrauensniveau einerseits den Sicherheitsanfordern genügt, andererseits diese aber nicht unnötig übersteigt. Somit kann eine Auswahl einer Merkmalskombination ermöglicht werden, welche eine effiziente Authentifizierung erlaubt, ohne unnötig Zeit in Anspruch zu nehmen bzw. unnötig aufwendig zu sein. Beispielsweise kann das Vertrauensniveau für eine Sport-App mit sicherheitstechnisch unsensiblen Daten deutlich niedriger gewählt werden als beispielsweise für eine Banking-App, mit welcher Geldtransaktionen getätigt werden können.

Ferner können durch eine kontinuierliche Erfassung und Auswertung von Daten die extrahierten Merkmalskombinationen optimiert werden. Beispielsweise können Merkmalskombinationen so extrahiert werden und/oder extrahierte Merkmalskombinationen so angepasst werden, dass ihr Vertrauensniveau höher, der Aufwand für die Erfassung der von der Merkmalskombination umfassten Merkmale geringer ist, die Anzahl an Merkmalskombinationen pro Vertrauensniveau gesteigert wird, und/oder das Vertrauensniveau einzelner Merkmale höher ist.

Nach Ausführungsformen werden die extrahierten Merkmalskombinationen und/oder die zugeordneten Vertrauensniveaus in der Datenbank gespeichert. Nach Ausführungsformen werden die erfassten Daten beispielsweise nach Ablauf eines vordefinierten Zeitintervalls aus der Datenbank gelöscht und lediglich die extrahierten Merkmalskombinationen und/oder die zugeordneten Vertrauensniveaus bleiben in der Datenbank gespeichert. Neu erfasste Daten werden dazu verwendet die bereits extrahierten Merkmalskombinationen zu optimieren und/oder neuen Merkmalskombinationen zu extrahieren.

Nach Ausführungsformen weist das Authentifizierungsdienst-Computersystem ferner Mittel zum Schutz gegen unbefugte Manipulationen auf. Durch die Mittel zum Schutz gegen unbefugte Manipulationen wird durch technische Maßnahmen die Vertrauenswürdigkeit des Authentifizierungsdienst-Computersystems, d.h. seine Funktion als "Vertrauensanker", gewährleistet. Beispielsweise wird das Authentifizierungsdienst-Computersystem von einer vertrauenswürdigen Institution, wie z.B. durch ein Trust-Center (Trust Service Provider), konfiguriert und mit dem benötigten kryptografischen Schlüsselmaterial versehen. Durch die Mittel zum Schutz gegen unbefugte Manipulationen kann sichergestellt werden, dass sicherheitsrelevante Funktionalitäten des Authentifizierungsdienst-Computersystems nicht modifiziert werden.

Nach einer Ausführungsform der Erfindung sind die Mittel zum Schutz des Authentifizierungsdienst-Computersystems gegen unbefugte Manipulationen als ein so genanntes Tamper Proof Module oder Trusted Platform Module (TPM) ausgebildet, welches auch als Tamper Resistant Module (TRM) bezeichnet werden. Beispielsweise sind zumindest Teile des Authentifizierungsdienst-Computersystems signiert, wie z.B. Programmkomponenten und/oder Hardwarekomponenten, die eine digitale Signatur tragen können. Insbesondere können das Betriebssystem, das Binary Input Output System (BIOS), eine Konfigurationsdatei und/oder ein Massenspeichermedium des Authentifizierungsdienst-Computersystems digital signiert sein. Vor einer Nutzung des Authentifizierungsdienst-Computersystems prüft das TRM dann, ob die Signatur bzw. die Signaturen, valide sind. Wenn eine der Signaturen nicht valide ist, sperrt das TRM die Nutzung des Authentifizierungsdienst-Computersystems. Ein TPM umfasst Mikrokontroller nach der TCG-Spezifikation wie in ISO/IEC 11889, der einen Computer oder ähnliche Geräte um grundlegende Sicherheitsfunktionen erweitert.

Nach einer Ausführungsform der Erfindung beinhalten die Mittel zum Schutz des Authentifizierungsdienst-Computersystems gegen unbefugte Manipulationen ferner mechanische Mittel, die z.B. das Öffnen des Authentifizierungsdienst-Computersystems oder seiner Teile verhindern sollen, oder die bei dem Versuch eines Eingriffs in das Authentifizierungsdienst-Computersystem dieses unbrauchbar machen, beispielsweise indem ein Datenverlust eintritt. Beispielsweise können hierzu sicherheitskritische Teile des Authentifizierungsdienst-Computersystems in Epoxidharz eingegossen sein, wobei ein Versuch, eine betreffende Komponente aus dem Epoxidharz zu entfernen, zu einer unvermeidlichen Zerstörung dieser Komponente führt. Insbesondere können die Mittel zum Schutz des Authentifizierungsdienst-Computersystems gegen unbefugte Manipulationen als ein so genanntes Hardware Security Modul (HSM) ausgebildet sein.

Nach Ausführungsformen wird das Authentifizierungsdienst-Computersystem durch ein Trust Center bereitgestellt. Ein Trust Center ist eine vertrauenswürdige dritte Instanz (engl. "trusted third party"), welche in elektronischen Kommunikationsprozessen sicherheitsrelevante Informationen bereitstellt, in deren Authentizität und/oder deren Sicherheit aufgrund der Integrität des Trust Centers vertraut wird. Um diese Integrität sicherzustellen, implementiert das Trust Center auf einem angemessenen Sicherheitsniveau organisatorische und technische Sicherheitsmaßnahmen. Generelle Anforderungen an ein Trust Center mit Sicherheitslevel "hoch" lassen sich im Hinblick auf Zertifikate beispielsweise der technischen Richtlinie des Bundesamtes für Sicherheit in der Informationstechnik TR-03145 "Secure Certification Authority operation" Version 1.0, 2014, entnehmen. Analoge Anforderungen lassen sich an ein Trust Center im Hinblick auf die Erzeugung und Verwaltung kryptographischer Hauptschlüssel anwenden. Das Trust Center fungiert somit als ein sogenannter "Vertrauensanker".

Nach Ausführungsformen erfolgt initial eine Registrierung des Nutzers gegenüber dem Authentifizierungsdienst-Computersystem, zum Beispiel mithilfe eines ID-Tokens, wie etwa einem elektronischen Personalausweises. Hierbei können dem Authentifizierungsdienst-Computersystem nach Ausführungsformen zudem Attribute des Nutzers zur Verfügung gestellt werden. Beispielsweise werden diese Attribute aus dem ID-Token ausgelesen oder von dem Nutzer eingegeben.

Nach Ausführungsformen variiert bei zumindest einem der Merkmale der zugeordnete Referenzwert, in Abhängigkeit von der Merkmalskombination, in welcher das entsprechende Merkmal zur Authentifizierung des Nutzers verwendet wird. Ausführungsformen können den Vorteil haben, dass Referenzwerte in Abhängigkeit von der verwendeten Merkmalskombination variieren. Selbst wenn es einem Angreifer gelingt einen Referenzwert für ein Merkmal auszuspähen, bringt ihm dies keinen Vorteil, wenn das entsprechende Merkmal in einer anderen Merkmalskombination für Authentifizierungszwecke abgefragt wird. Beispielsweise kann ein Merkmal die räumliche Lage bzw. Orientierung eines zur Authentifizierung verwendeten Nutzer-Computersystem, wie etwa einem Smartphone, umfassen. Der zugeordnete Referenzwert kann beispielsweise variieren, je nachdem, ob die räumliche Lage in Kombination mit einem Schrittmuster des Nutzers erfasst wird, d.h. während des Gehens des Nutzers, wenn der Nutzer das Smartphone zum Telefonieren verwendet, also an sein Ohr hält, oder wenn der Nutzer Daten über einen Touchscreen eingibt.

Nach Ausführungsformen werden beispielsweise solche Merkmalskombinationen ausgewählt, deren Erfassung keine zusätzlichen Tätigkeiten des Nutzers erfordern. Beispielsweise können für den Zugang zu einem Gebäude als Merkmalskombination folgende Merkmale herangezogen werden: Schrittmuster des Nutzers, wenn er sich einer Tür des Gebäudes nährt, eine bestehende Kommunikationsverbindung zu ein oder zwei weiteren Kommunikationssystemen des Nutzers, wie etwa einer Smartwatch und einem Fahrzeug, mit welchem der Nutzer üblicherweise zu dem entsprechenden Gebäude gelangt. Ferner können bestimmte Apps, welche auf dem Smartphone ausgeführt werden, wie etwa das Hören eines bestimmten Radiosenders oder die Geoposition des Smartphones ebenfalls herangezogen werden. Betrifft die Authentifizierung einen Zugriff auf eine App, kann beispielsweise die Fingerposition und/oder -form beim Halten des Smartphones erfasst werden. Ferner können als Merkmale das Verhalten des Nutzers in einem bestimmten, der Authentifizierung vorausgehenden Zeitintervall genutzt werden.

Nach Ausführungsformen ist den Merkmalskombinationen ferner jeweils ein Signifikanzschema zugeordnet, welches einzelnen Merkmalen der jeweiligen Merkmalskombination jeweils einen Signifikanzwert zuweist. Ausführungsformen können den Vorteil haben, dass die Signifikanzwerte der einzelnen Merkmale deren Beitrag zu dem aus der Merkmalskombination resultierenden Vertrauensniveau angeben. Können bei einer Authentifizierung beispielsweise einzelne Merkmale nicht erfasst werden, lässt sich in Ausführungsformen anhand der Signifikanzwerte der erfassten Merkmale ein erreichtes Vertrauensniveau ermitteln. Um das für die Authentifizierung vorgegebene Vertrauensniveau zu erreichen, können beispielsweise ein oder mehrere Ersatzmerkmale gewählt werden, deren Signifikanzwerte die fehlenden Signifikanzwerte ausgleichen.

Nach Ausführungsformen variiert bei zumindest einem der Merkmale der zugewiesene Signifikanzwert, in Abhängigkeit von der Merkmalskombination, in welcher das entsprechende Merkmal zur Authentifizierung des Nutzers verwendet wird. Ausführungsformen können den Vorteil haben, dass ein Merkmal in einer Merkmalskombination charakteristischer für einen Nutzer sein kann, als in einer anderen einer Merkmalskombination, und damit in der ersterer auch mehr zum Erreichen des Vertrauensniveaus beiträgt. Beispielsweise kann die Position eines Smartphones, während des Laufens des Nutzers weniger charakteristisch sein, falls der Nutzer das Smartphone in einer Jackentasche aufbewahrt, als die Position des Smartphones beim Eingeben von Daten.

Nach Ausführungsformen erfolgt die Zuordnung der Vertrauensniveaus unter Verwendung der Signifikanzwerte der Merkmale der jeweiligen Merkmalskombination. Ausführungsformen können den Vorteil haben, dass sich aus den Signifikanzwerten der Merkmale das resultierende Vertrauensniveau effizient bestimmen lässt.

Nach Ausführungsformen wird das Vertrauensniveau durch die Authentifizierungsanfrage vorgegeben. Somit kann beispielsweise entweder der Nutzer, der sich authentifizieren möchte, oder ein Dienstanbieter, dem gegenüber sich der Nutzer authentifizieren möchte, das Vertrauensniveau durch die Authentifizierungsanfrage vorgeben. Ausführungsformen können den Vorteil haben, dass das ein Dienstanbieter bestimmen kann, welches Vertrauensniveau er für eine erfolgreiche Authentifizierung des Nutzers voraussetzt. So können beispielsweise für verschiedene Gebäude und/oder Gebäudeteile unterschiedliche Vertrauensniveaus vorgegeben werden, welche notwendig sind für eine erfolgreiche Authentifizierung eines Nutzers zum Erlangen einer Zugangsberechtigung. Ist einem Gebäude und/oder einem Gebäudeteil eine höhere Sicherheitsstufe zugeordnet, so sollte auch die Authentifizierung höheren Anforderungen unterliegen, sodass mit einer höheren Wahrscheinlichkeit davon ausgegangen werden kann, dass es sich bei einem authentifizierten Nutzer auch tatsächlich um den authentifizierten Nutzer handelt.

Nach Ausführungsformen wird das Vertrauensniveau unter Verwendung eines der Authentifizierungsanfrage zugeordneten Kontext bestimmt. Ausführungsformen können den Vorteil haben, dass anhand der Authentifizierungsanfrage automatisch ermittelt werden kann, welches Vertrauensniveau für eine erfolgreiche Authentifizierung zu erzielen ist.

Nach Ausführungsformen wird das Vertrauensniveau unter Verwendung von zuvor innerhalb eines vorgegebenen Zeitraums erfolgten Authentifizierungsversuchen bestimmt. Ausführungsformen können den Vorteil haben, dass das Vertrauensniveaus situationsabhängig, d.h. dynamisch angepasst werden kann. Wurde ein Nutzer innerhalb eines vorgegebenen Zeitraums bereits mehrmals erfolgreich authentifiziert, so kann dies Rückschlüsse für eine vorliegende Authentifizierung bieten. Dies gilt insbesondere, wenn die einzelnen Authentifizierungen miteinander zusammenhängen. Beispielsweise hat sich ein Nutzer frühs, etwa nach dem Aufstehen, gegenüber seinem Smart Home-System authentifiziert und/oder gegenüber einem beliebigen anderen Dienstanbieter, wobei die Geodaten, etwa GPS-Daten, des Nutzers erfasst wurden. Daraufhin authentifiziert sich der Nutzer gegenüber einem ihm zugeordneten Fahrzeug, z.B. einem Auto. Auf dem Weg zu seinem Büro greift der Nutzer auf Anwendungen zu, beispielsweise einem Musikstreaming-Dienst, wozu er sich ebenfalls authentifizieren muss. Erreicht der Nutzer nun einen Parkplatz seines Büros und möchte eine Schranke, die den Zugang zu dem Parkplatz begrenzt passieren, genügt für eine Authentifizierung gegenüber einem Terminal, welches die Schranke steuert, ein geringeres Vertrauensniveau. Aufgrund der zuvor erfolgreichen Authentifizierungen steigt die Wahrscheinlichkeit, dass es sich bei dem authentifizierten Nutzer an der Schranke auch tatsächlich um den zu authentifizierenden Nutzer handelt, selbst wenn die Wahrscheinlichkeit für die letzte Authentifizierung alleine betrachtet deutlich geringer ist.

Kommt der Nutzer jedoch nicht von zuhause, benutzt einen anderen Anfahrtsweg als üblich und möglicherweise auch noch einen Leihwagen, so kann das erforderliche Vertrauensniveau für die nachzuweisende Merkmalskombination an der Schranke des Parkplatzes erhöht werden. Dies gilt insbesondere, wenn es bisher nie oder nur selten vorgekommen ist, dass der Nutzer nicht von zuhause und mit einem Leihwagen zu seinem Büro kommt.

Ferner kann das für eine erfolgreiche Authentifizierung erforderliche Vertrauensniveau auch erhöht werden, falls es innerhalb eines vorgegebenen Zeitraums eine Mehrzahl erfolgloser Authentifizierungsversuche gegeben hat. Dies kann beispielsweise auf Zugriffsversuche unberechtigter Dritter hinweisen. Durch eine anheben des zu erzielenden Vertrauensniveaus kann somit die Sicherheit situationsabhängig erhöht werden.

Nach Ausführungsformen wird zumindest eine der Merkmalskombinationen auf Basis der statistischen Häufigkeit, mit welcher Merkmale in der entsprechenden Kombination in der Vergangenheit für den Nutzer erfasst wurden, erstellt. Ausführungsformen können den Vorteil haben, dass sie ein effizientes Erstellen von Merkmalskombinationen ermöglichen, welche charakteristisch für einen Nutzer sind. Insbesondere können so charakteristische Merkmalskombinationen erstellt werden, deren Vertrauensniveau größer als die Vertrauensniveaus der einzelnen Merkmale sind.

Nach Ausführungsformen handelt es sich bei zumindest einem der Referenzwerte um einen Erwartungswert, welcher auf Basis eines dem Nutzer zugeordneten prädiktiven Modells bestimmt wurde. Ausführungsformen können den Vorteil haben, dass auf Basis des Verhaltens des Nutzers in der Vergangenheit ein für den Nutzer charakteristisches Verhaltensprofil erstellt werden kann, welches als prädiktives Model genutzt werden kann. Dieses prädiktive Model stellt Erwartungswerte für Verhaltensmerkmale des Nutzers bereit, die als Referenzwerte genutzt werden können, um zu prüfen, ob der Nutzer das für ihn zu erwartende charakteristische Verhalten zeigt. Der Nutzer kann sich beispielweise zu einer bestimmten Uhrzeit für gewöhnlich an einem bestimmten Ort aufhalten und bestimmte Tätigkeiten ausführen.

Nach Ausführungsformen beträgt die Anzahl an Merkmalen je Merkmalskombination mindestens drei. Ausführungsformen können den Vorteil haben, dass durch eine höhere Anzahl von Merkmalen das Vertrauensniveau der Merkmalskombination steigt

Nach Ausführungsformen sind die Vertrauensniveaus in Vertrauensklassen unterteilt und die Auswahl der Merkmalskombination erfolgt aus den Merkmalskombinationen einer für die Authentifizierungsanfrage verwendeten Vertrauensklasse zufällig. Ausführungsformen können den Vorteil haben, dass das für einen Angreifer nicht vorhersehbar ist, welche Merkmalskombination für einen bestimmten Authentifizierungsversuch abgefragt wird. Selbst wenn der Angreifer beispielsweise die Referenzwerte für eine frühere Authentifizierung ausspähen konnte, kann er mit diesen nicht erfolgreich authentifizieren, wenn die abgefragten Merkmalskombinationen zufällig variieren.

Nach Ausführungsformen legt die Datenbank vordefinierte Merkmalskombinationen für einen vorbestimmten Kontextzusammenhang einer Authentifizierung fest. Ausführungsformen können den Vorteil haben, dass für bestimmte Authentifizierungen die nachzuweisenden Merkmalskombinationen vordefiniert werden können. Somit können beispielsweise der Nutzer und/oder ein Dienstanbieter gegenüber dem sich der Nutzer authentifizieren möchte für bestimmte Fälle bestimmte Merkmalskombinationen, denen sie beispielsweise besonders vertrauen und/oder welche für besonders effizient nachzuweisen sind, vorgeben.

Nach Ausführungsformen wird das Signifikanzschema zumindest einer Merkmalskombination mit der Zeit angepasst in Abhängigkeit von der Häufigkeit und dem Erfolg von Authentifizierungsversuchen unter Verwendung der entsprechenden Merkmalskombination. Ausführungsformen können den Vorteil haben, dass sich eine Merkmalskombination durch eine häufige und erfolgreiche Verwendung als zuverlässig und für den Nutzer charakteristisch erweist. Daraufhin kann das Signifikanzschema angepasst werden und den einzelnen Merkmalen in dieser Kombination höhere Signifikanzwerte zugeordnet werden, wodurch beispielsweise das Vertrauensniveau der Kombination steigt. Im Hinblick auf den Erfolg der Verwendung der Merkmalskombination kann beispielsweise die Häufigkeit von fehlgeschlagenen Authentifizierungen berücksichtigt werden. Je seltener die Verwendung einer Merkmalskombination bei Authentifizierungen fehlschlägt, desto geeigneter kann die Merkmalskombination für Authentifizierungen sein. Nach Ausführungsformen wird zusätzlich zu einer Anpassung des Signifikanzschemas oder unabhängig davon eine Merkmalskombination, welche häufig und erfolgreich verwendet wurde, bei der Auswahl bevorzugt.

Nach Ausführungsformen wird im Fall, dass sich das der Merkmalskombination zugeordnete Vertrauensniveau durch die Anpassung des Signifikanzschemas soweit erhöht, dass es in eine neue Vertrauensklasse fällt, eine neue Merkmalskombination erstellt, wobei aus der Merkmalskombination mit erhöhtem Vertrauensniveau zumindest ein Merkmal gestrichen wird, sodass das Vertrauensniveau in die bisherige Vertrauensklasse fällt. Ausführungsformen können den Vorteil haben, dass neue einfachere und effizientere Merkmalskombination ermittelt werden können, ohne die Sicherheit des Verfahrens zu reduzieren. Insbesondere können solche Merkmalskombinationen mit weniger Merkmalen eine schnellere Authentifizierung mit weniger Rechenaufwand ermöglichen. Dies ist insbesondere für tragbare, batteriebetriebene Geräte von Vorteil, da dadurch der Energieverbrauch reduziert und die Batteriedauer verlängert werden kann.

Nach Ausführungsformen ist den Merkmalskombinationen ferner jeweils zumindest ein Schwellenwert zugeordnet, wobei der Schwellenwert einen für das Vertrauensniveau zu erreichenden Authentisierungsgrad definiert, wobei der Authentisierungsgrad den Grad der Übereinstimmung zwischen den Referenzwerten der Merkmale einer Merkmalskombination und den für eine Authentifizierung erfassten Messwerten für die nachzuweisenden Merkmale bestimmt. Ausführungsformen können den Vorteil haben, dass eine Authentifizierung eines Nutzers nicht mehr absolut erfolgt, d.h. der Nutzer wird nicht mehr mit (nahezu) absoluter Sicherheit authentifiziert, sondern vielmehr graduell. Der Nutzer muss sich somit für eine erfolgreiche Authentifizierung nur noch bis zu einem bestimmten Grad authentifizieren.

Nach Ausführungsformen kann der Schwellenwert variiert werden. Durch Variieren des Schwellenwerts in Abhängigkeit von der Authentifizierungsanfrage variiert der erforderliche Authentifizierungsgrad und damit das resultierende Vertrauensniveau. So kann beispielsweise für eine Authentifizierungsanfrage mit niedriger Sicherheitsanforderung ein niedrigerer Schwellenwert gewählt werden als für eine Authentifizierungsanfrage mit höherer Sicherheitsanforderung.

Nach Ausführungsformen ist für zumindest eine der Merkmalskombinationen zumindest ein Zusatzmerkmal festgelegt für den Fall, dass ein sich aus den für eine Authentifizierung erfassten Messwerten ergebende Wert den Schwellenwert nicht überschreitet. Ausführungsformen können den Vorteil haben, dass im Falle eines Nichtüberschreitens des Schwellenwerts, d.h. einer ungenügenden Authentifizierung, ein oder mehrere Zusatzmerkmale abgefragt werden. Somit kann bei einer fehlerhaften Erfassung eines Messwerts für eines der Merkmale auf das Zusatzmerkmal zurückgegriffen werden. Dies kann beispielsweise vorteilhaft sein, falls bestimmte Merkmale aufgrund der Umstände oder aufgrund einer Funktionsstörung eines der Sensorgeräte fehlerhaft oder gar nicht erfasst werden.

Nach Ausführungsformen ist für zumindest eine der Merkmalskombinationen zumindest eine Ersatzmerkmalskombination festgelegt für den Fall, dass ein sich aus den für eine Authentifizierung erfassten Messwerten ergebende Wert den Schwellenwert nicht überschreitet. Ausführungsformen können den Vorteil haben, dass so eine Ersatzmerkmalskombination gewählt werden kann, bei denen die einzelnen Merkmale in ihrer Kombination signifikanter bzw. charakteristischer für den Nutzer sind, als jeweils für sich alleine genommen.

Nach Ausführungsformen ist das der Ersatzmerkmalskombination zugeordnete Vertrauensniveau identisch mit dem Vertrauensniveau der Merkmalskombination, für welche der Schwellenwert nicht überschritten wurde. Ausführungsformen können den Vorteil haben, dass eine Erfassung und Auswertung der Messwerte für die Authentifizierung mittels der Ersatzmerkmalskombination ebenso schnell und einfach erfolgen kann wie für die ursprüngliche Merkmalskombination, für welche der Schwellenwert nicht überschritten wurde.

Nach Ausführungsformen ist das der Ersatzmerkmalskombination zugeordnete Vertrauensniveau höher als das Vertrauensniveau der Merkmalskombination, für welche der Schwellenwert nicht überschritten wurde. Ausführungsformen können den Vorteil haben, dass ein unterschreiten des Schwellenwerts für die ursprüngliche Merkmalskombination auf einen manipulationsversuch hindeuten kann. Durch eine Erhöhung des Vertrauensniveaus kann eine effektive situationsabhängige Anpassung des Vertrauensniveaus und damit der durch das Verfahren erzielten Sicherheit gewährleistet werden.

Nach Ausführungsformen handelt es sich bei der Datenbank um eine Blockchain. Ausführungsformen können den Vorteil haben, dass sie eine fälschungssichere Speicherung der Daten ermöglicht. Nach Ausführungsformen ist eine eigenständige Blockchain zum Speichern der extrahierten Merkmalskombinationen, den Referenzwerten der Merkmale und/oder der den Merkmalskombinationen zugeordneten Vertrauensniveaus vorgesehen.

Unter einer "Blockchain" wird hier und im Folgenden eine geordnete Datenstruktur verstanden, wobei jeder Block der Blockchain durch einen Hash-Wert identifiziert wird und einen Vorgängerblock in der Blockchain referenziert, für Beispiele einer Blockchain vergleiche https://en.wikipedia.org/wiki/Block_chain_(database) und "Mastering Bitcoin", Chapter 7, The Blockchain, Seite 161 ff. Das Konzept der Blockchains wurde im Jahre 2008 in einem White Paper unter dem Pseudonym Satoshi Nakamoto zu Bitcoin beschrieben ("Bitcoin: Peer-to-Peer Electronic Cash System" (https://bitcoin.org/bitcoin.pdf)). Die Blockchain besteht aus einer Reihe von Datenblöcken, in denen jeweils ein oder mehrere Einträge bzw. Transaktionen zusammengefasst und mit einer Prüfsumme in Form eines Hashwerts versehen sind. Neue Blöcke der Blockchain werden in einem üblicher Weise rechenintensiven Prozess erzeugt, der auch als sogenanntes Mining bezeichnet wird. Diese neu erzeugten Blöcke werden anschließend der Blockchain hinzugefügt und über ein Netzwerk an alle Teilnehmer, bzw. Knoten des Netzwerks, verbreitet. Nach alternativen Ausführungsformen kann der rechenintensive Prozess des Minings auch durch einen alternativen Prozess der Blockerzeugung beruhend auf einem Konsens mit dem neuen Block ersetzt sein. Die Einträge der Datenblöcke können beispielsweise zu speichernde Daten umfassen.

Ausführungsformen können den Vorteil haben, dass die Blockchain durch die Speicherung kryptografischer Prüfsumme, d.h. Haschwerten, des vorangehenden Blocks im jeweils nachfolgenden Block ein hohes Maß an Sicherheit gegenüber nachträglichen Manipulationen bietet. Bei einer Blockchain werden die Einträge bzw. Transaktionen eines Blocks beispielsweise durch einen Merkle-Baum paarweise miteinander gehasht und nur der letzte auf diese Weise erhaltene Hashwert des Blocks, der sogenannte Root-Hashwert bzw. Wurzelhashwert, als Prüfsumme beispielsweise in einem Header des Blocks vermerkt. Das Verketten der Blöcke kann dann unter Verwendung dieser Root-Hashwerte erfolgen. Jeder Block der Blockchain kann in seinem Header den Hash des gesamten vorherigen Blockheaders enthalten. Somit wird die Reihenfolge der Blöcke eindeutig festgelegt und es entsteht eine Kettenstruktur. Durch die so implementierte Verkettung der einzelnen Blöcke miteinander wird erreicht, dass ein nachträgliches Modifizieren vorangegangener Blöcke bzw. einzelner von diesen umfasst und über den Root-Hashwert gesicherten Transaktionen praktisch ausgeschlossen ist, da hierfür die Hashwerte aller nachfolgenden Blöcke in kurzer Zeit ebenfalls neu berechnet werden müssten.

Zudem kann durch eine Anpassung der notwendigen Rechenintensität für die Erstellung jeweils neuer Blöcke die Sicherheit zusätzlich erhöht werden. Die für die Erstellung neuer Blöcke notwenige Rechenintensität lässt sich über Anforderungen an den Hashwert des zu erstellenden neuen Blocks steuern. Der resultierende Hash-Wert ist nicht vorhersagbar, vielmehr handelt es sich um eine zufallsverteilte Zahl. Es lässt sich aber berechnen, wieviel Zeit in Abhängigkeit von der aufgewendeten Rechenleistung im statistischen Mittel zum Auffinden eines gültigen neuen Blocks notwendig ist. Der Hashwert eines Blocks lässt sich beispielsweise durch Hinzufügen und Variieren eines Nounce variieren. Aufgrund der Kettenstruktur können Daten, die einmal in einer Blockchain gespeichert sind, nicht mehr geändert oder entfernt werden, ohne große Teile der Blockchain zu ersetzen. Eine solche Ersetzung scheidet jedoch als Folge einer ausreichend rechenintensiven Generierung neuer Blöcke aus. Ferner kann auch die dezentrale Erzeugung von Blöcken für die Blockchain und/oder die dezentrale Speicherung der Blockchain Manipulationen erschweren, da solche Manipulationen unbemerkt an alle Teilsysteme bzw. Blockchainserver propagiert und ggf. durch diese akzeptiert werden müssten. Bekannte Ausführungsformen einer Blockchain, wie etwa im Fall der Kryptowährung Bitcoin, basieren auf einer Anonymität der an den Transaktionen beteiligten Partner. Demgegenüber kann durch oben beschriebene Signatur der in die Transaktionen eingetragenen Hashwerte, deren Authentizität belegt und ihr Ursprung nachgewiesen werden. Hierdurch kann die Fälschungssicherheit verbessert werden.

Eine Anforderung an einen gültigen Block kann beispielsweise darin bestehen, dass der Hashwert des Headers des Blocks kleiner gleich einem Grenzwert ist. Die Hashwertberechnung kann beispielsweise mit dem Secure Hash Algorithmus (SHA) SHA 256 erfolgen. Der resultierende Hash-Wert ist in diesem Fall eine Zufallszahl zwischen 0 und 2²⁵⁶-1. Die Wahrscheinlichkeit, dass beim Anwenden des Hashalgorithmus einen bestimmten Hash herauskommt, ist somit (maximaler Hash-Wert+1)⁻¹, im Falle des SHA 256-Algorithums also 2⁻²⁵⁶. Die Wahrscheinlichkeit, dass der resultierende Hash-Wert kleiner gleich einem Grenzwert bzw. Zielwert (engl. "target") ist, beträgt daher (target)/(max. Hash-Wert). Für einen beispielhaften maximalen Grenzwert von (2¹⁶-1)·2²⁰⁸ beträgt die Wahrscheinlichkeit [(2¹⁶-1)·2²⁰⁸]/ 2²⁵⁶ ≈ 2⁻³².

Die Schwierigkeit S eine Hash-Wert zu erhalten, welcher kleiner gleich einem gewählten Grenzwert bzw. target ist, kann in Abhängigkeit eines maximalen Grenzwerts bzw. max. target wie folgt angegeben werden: S = (max. target)/target. Mithin ist die Wahrscheinlichkeit einen Hash-Wert zu erhalten, welcher kleiner gleich dem gewählten Grenzwert ist, für das zuvor gegebene Beispiel: 2⁻³²/S. Als Beispiel sei ein Computersystem mit einer bestimmten Hashrate betrachtet, welches im Durchschnitt alle x·Sek. einen Hash-Wert findet, welcher kleiner gleich dem gewählten Grenzwert ist. Soll das Computersystem anstelle aller x·Sek. im Durchschnitt alle y·Sek. einen Treffer erzielen, so kann die Schwierigkeit entsprechend angepasst werden: S_{y}=(x/y)·S. Entsprechende Anpassungen der Schwierigkeit können auch dazu verwendet werden die Trefferrate bei Veränderungen des Computersystems, z.B. Veränderungen der Rechenleistung durch Erhöhen oder Verringern der Anzahl an Blockchain-Servern, konstant zu halten. Wird die Schwierigkeit so angepasst, dass alle y·Sek. ein Treffer erzielt wird, kann die Hashrate R des Computersystems wie folgt parametrisiert werden: R = (2³²·S)/(y·Sek.).

Werden gültige Blöcke durch ein rechenintensive Verfahren, wie das zuvor Beschriebene erzeugt, so vertrauen die Teilnehmer des Blockchain-Netzwerks der längsten gültigen Blockchain, da hinter dieser die meiste Rechenleistung steht und somit angenommen werden kann, dass diese von der Mehrheit der Teilnehmer als gültig anerkannt wird. Kommt es beispielsweise dazu, dass ein Fork, d.h. eine Verzweigung, in der Blockchain entsteht, setzt sich irgendwann der Fork mit der größeren Kettenlänge durch, da anzunehmen ist, dass hinter diesem die Mehrheit der Teilnehmer steht.

Eine Blockchain kann beispielsweise auch in Form einer privaten Blockchain implementiert werden, wobei nur eine ausgewählte Gruppe von Teilnehmern eine Berechtigung zum Hinzufügen gültiger Blöcke besitzt. Eine entsprechende Berechtigung kann beispielsweise mittels einer Signatur unter Verwendung eines privaten kryptographischen Schlüssels nachgewiesen werden. Der private kryptographische Schlüssel kann zu einem asymmetrischen Schlüsselpaar gehören, zu welchem auch ein öffentlicher kryptographischer Schlüssel gehört, mit dem die Signatur geprüft werden kann. Dem asymmetrischen Schlüsselpaar kann zudem beispielsweise ein Zertifikat zugeordnet sein, welches die Berechtigung zum Erzeugen eines gültigen Blocks der Blockchain belegt. Dieses Zertifikat kann ferner einer PKI zugeordnet sein, welche die Authentizität des Zertifikats belegt. Nach einer weiteren Ausführungsform kann beispielsweise für jeden Teilnehmer aus der ausgewählte Gruppe ein öffentlicher Schlüssel in der Blockchain hinterlegt sein, beispielsweise in einem Genesisblock, d.h. dem ersten Block der Blockchain. Anhand dieser öffentlichen Schlüssel kann geprüft werden, ob Signaturen von Blöcken und damit die entsprechenden Blöcke selbst gültig sind.

Ein Konsens kann auch auf andere Weise in einer Blockchain implementiert werden. So kann etwa ein Konsens erreicht werden, indem über eine Aufnahme vorgeschlagener Einträge in die Blockchain abgestimmt wird. Beispielsweise führt jeder Teilnehmer eine eindeutige Liste anderer Teilnehmer, welchen er als Gruppe vertraut. Jeder Teilnehmer kann neue Einträge vorschlagen, die in einen neuen Block der Blockchain aufgenommen werden sollen. Über die Aufnahme und damit die Anerkennung der Gültigkeit der vorgeschlagenen Einträge wird abgestimmt. So stimmt beispielsweise jeder Teilnehmer nur über diejenigen Vorschläge ab, welche von Teilnehmern seiner Liste stammen. Mit anderen Worten werden für die Entscheidung, ob ein Vorschlag für einen neuen Eintrag als gültig anerkannt wird, d.h. ob bezüglich der Gültigkeit dieses Eintrages ein Konsens zwischen den Teilnehmern besteht, nur die Stimmen derjenigen Teilnehmer berücksichtig, die von der Liste desjenigen Teilnehmers umfasst sind, der den entsprechenden Vorschlag macht. Damit ein Vorschlag für einen Eintrag als gültig angenommen wird, muss ein bestimmter Minimumanteil an stimmberechtigten Teilnehmern mit Ja stimmen, beispielsweise 80%. Alle vorgeschlagenen Einträge, die dieses Kriterium erfüllen werden in die Blockchain aufgenommen. Eine solche Abstimmung kann mehrere Runden umfassen. Alle anderen Vorschläge, die das zuvor genannte Kriterium nicht erfüllen, werden verworfen oder bei der Abstimmung über den nächsten Block der Blockchain erneut zur Abstimmung gestellt. Die zuvor genannten Listen stellen Untergruppen des Blockchain-Netzwerks dar, denen der Teilnehmer, welcher die jeweilige Liste führt, als Gruppe insgesamt traut, ohne dass dies erfordert, dass er jedem einzelnen Teilnehmer der Liste traut. Ein Beispiel für ein solches Konsensverfahren bietet der Ripple Protokoll Konsens Algorithmus (David Schwartz et al.: "The Ripple Protocol Consensus Algorithm", Ripple Labs Inc., 2014, https://ripple.com/files/ripple_consensus_whitepaper.pdf).

Beispielsweise kann es sich bei der Blockchain um eine private oder öffentliche Blockchain handeln. Beispielsweise handelt es sich um eine Bitcoin-, Litecoin- oder Ethereum-Blockchain.

Nach Ausführungsformen ist das Computersystem, in welchem der Authentifizierungsdienst implementiert, ist alleine zum Erstellen neuer Blöcke der Blockchain berechtigt. Nach weiteren ist das Computersystem, in welchem der Authentifizierungsdienst implementiert, Teil eines Blockchain-Netzwerks mit einer Mehrzahl von Systemkomponenten die zum Erstellen neuer Blöcke der Blockchain berechtigt sind bzw. deren Konsens Voraussetzung für das Erstellen neuer Blöcke der Blockchain ist

Nach Ausführungsformen sind die gespeicherten Daten durch eine Verschlüsselung kryptographisch gesichert. Ausführungsformen können den Vorteil haben, dass die Daten des Nutzers vor unerlaubten Zugriffen und/oder Fälschungsversuchen sicher gespeichert werden können. Nach Ausführungsformen sind ferner die Merkmalskombinationen und/oder Vertrauensniveaus durch eine Verschlüsselung kryptographisch gesichert. Nach Ausführungsformen erfolgt eine Entschlüsselung jeweils nur, wenn die entsprechenden Daten, Merkmale und/oder Angaben zum Vertrauensniveau benötigt werden.

Nach Ausführungsformen sind die gespeicherten Daten durch eine digitale Signatur kryptographisch gesichert. Ausführungsformen können den Vorteil haben, dass die Authentizität der entsprechenden Daten durch die Signatur mit einem Signaturprüfschlüssel nachprüfbar ist. Nach Ausführungsformen sind ferner die Merkmalskombinationen und/oder Vertrauensniveaus durch eine digitale Signatur kryptographisch gesichert.

Nach Ausführungsformen umfasst das Verfahren ferner:
- Abfragen von Messwerten der für die Authentifizierung nachzuweisenden Merkmale der ausgewählten Merkmalskombination,
- Empfangen der abgefragten Messwerte,
- Vergleichen der empfangenen Messwerte mit den Referenzwerten der ausgewählten Merkmalskombination,
- Bestimmen eines Authentifizierungsgrads des Nutzers unter Verwendung des Grads der Übereinstimmungen zwischen den Messwerten und den Referenzwerten,
- falls der bestimmte Authentifizierungsgrad über dem der Merkmalskombination zugeordneten Schwellenwert liegt, Erzeugen und Senden eines Authentifizierungstokens zur Bestätigung einer erfolgreichen Authentifizierung des Nutzers.

Ausführungsformen können den Vorteil haben, dass die ausgewählte Merkmalskombination für eine effiziente Authentifizierung eines Nutzers in Antwort auf eine entsprechende Authentifizierungsanfrage ermöglichen. Auf eine erfolgreiche Authentifizierung hin wird ein Authentifizierungstoken bereitgestellt, welches die Authentifizierung bestätigt. Die Abfrage der Messwerte kann dabei von einem zentralen Authentifizierungsdienstanbieter-Computersystem direkt ausgeführt werden oder über ein Nutzer-Computersystem erfolgen.

Ausführungsformen können dabei den Vorteil haben, dass Merkmale für die Authentifizierung gewählt und abgefragt werden können, welche zwar weniger signifikant für den Nutzer, dafür aber einfacher zu erfassen und/oder auszuwerten sind. Ferner kann eine Authentifizierung bei einem niedrigeren Schwellenwert auch dann erfolgreich sein, wenn ein Messwert eines Merkmals ungenau erfasst wurde. Ein ungenauer Messwert führt zu einer geringeren Übereinstimmung mit dem hinterlegten Referenzwert und somit zu einem niedrigeren Authentifizierungsgrad. Im Falle eines niedrigeren Schwellenwerts kann dieser Authentifizierungsgrad aber je nach Ausmaß der Ungenauigkeit immer noch ausreichend für eine erfolgreiche Authentifizierung sein. Dies erlaubt es beispielsweise auch auf ungenauere aber günstiger und technisch einfacher zu implementierende Sensoren zum Erfassen der Messwerte zurückzugreifen. Hinzukommt, dass in bestimmten Situationen beispielsweise kein hochsensibler Sensor zur Verfügung steht oder die Messgenauigkeit eines Sensors nachgelassen hat.

Beispielsweise kann der Authentifizierungsanfrage ein Kontext zugeordnet sein und der Schwellenwert kontextabhängig gewählt werden. Nach Ausführungsformen wird das Authentifizierungsverfahren halbautomatisch oder vollautomatisch ausgeführt. Ein Authentifizierungsverfahren gilt als halbautomatisiert, wenn der sich authentisierende Nutzer keinerlei manuelle Dateneingabe vornehmen muss. Ein Authentifizierungsverfahren gilt als vollautomatisiert, wenn der sich authentisierende Nutzer keinerlei Handhabung mehr erledigen muss.

Nach Ausführungsformen umfasst das Verfahren ferner:
- Senden der ausgewählten Merkmalskombination in Antwort auf die Authentifizierungsanfrage an den Absender der Authentifizierungsanfrage,
- Ausführen der Abfragen von Messwerten auf einen Empfang einer Bestätigung der Merkmalskombination hin.

Ausführungsformen können den Vorteil haben, dass der Absender der Authentifizierungsanfrage prüfen kann, ob die von dem Authentifizierungsdienst für die Authentifizierung vorgesehene Merkmalskombination seinen Kriterien an eine Authentifizierung genügt.

Nach Ausführungsformen schränkt die Authentifizierungsanfrage die zur Auswahl stehenden Merkmalskombination hinsichtlich bestimmter Merkmale ein, zum Beispiel indem die auszuwählende Merkmalskombination ein oder mehrere Merkmale umfassen muss oder nicht umfassen darf. Ausführungsformen können den Vorteil haben, dass der Absender der Authentifizierungsanfrage Einfluss auf die Auswahl der Merkmalskombination nehmen kann, falls er bestimmte Merkmale als notwendig oder ausgeschlossen für eine erfolgreiche Authentifizierung erachtet.

Nach Ausführungsformen gibt das Authentisierungstoken den bestimmten Authentifizierungsgrad an. Ausführungsformen können den Vorteil haben, dass für den Empfänger aus dem Authentifizierungstoken ersichtlich wird zu welchem Grad eine Authentifizierung erfolgreich war. Nach Ausführungsformen gibt das Authentisierungstoken das Vertrauensniveau und/oder die Vertrauensklasse der zur Authentifizierung verwendeten Merkmalskombination an.

Nach Ausführungsformen umfasst das Authentisierungstoken ferner ein oder mehrere Attribute des Nutzers, welche unabhängig von den zur Authentifizierung genutzten Merkmalen sind. Ausführungsforme können den Vorteil haben, dass das Authentisierungstoken zusätzliche Informationen umfassen kann, welche für ein bereitstellen eines angefragten Dienstes notwendig sind. Diese zusätzlichen Merkmale können beispielsweise das Alter des authentifizierten Nutzers oder Sicherheitsfreigaben umfassen, welche diesem zugeordnet sind.

Nach Ausführungsformen umfasst ein dem Nutzer zugeordnetes Nutzer-Computersystem die Datenbank. Ausführungsformen können den Vorteil haben, dass der Nutzer die Verfügungshoheit über seine Daten behält. Insbesondere kann es sich bei dem Nutzer-Computersystem um ein tragbares Kommunikationssystem, wie etwa ein Smartphone handeln. Insbesondere kann eine Authentifizierung bei einem tragbaren Kommunikationssystem auch im Offline-Modus, d.h. ohne Internetanschluss erfolgen.

Nach Ausführungsformen umfasst ein einem Authentifizierungsdienst zugeordnetes Authentifizierungsdienst-Computersystem die Datenbank. Ausführungsformen können den Vorteil haben, dass das ein Authentifizierungsdienst-Computersystem beispielsweise als zentraler Server Authentifizierungen für eine Mehrzahl von Nutzern ermöglichen kann. Ferner kann ein Authentifizierungsdienst-Computersystem beispielsweise eine größere Rechenleistung und/oder mehr Speicher zur Verfügung stellt.

Nach Ausführungsformen extrahiert das Nutzer-Computersystem die Merkmalskombinationen. Ausführungsformen können den Vorteil haben, dass der Nutzer die Verfügungshoheit über die Extraktion behält. Nach Ausführungsformen extrahiert das Authentifizierungsdienst-Computersystem die Merkmalskombinationen. Ausführungsformen können den Vorteil haben, dass das Authentifizierungsdienst-Computersystem beispielsweise eine größere Rechenleistung zur Verfügung stellt. Ferner kann eine Auswertung der Daten in diesem Fall durch eine unabhängige Instanz in Form des Authentifizierungsdienst-Computersystem erfolgen.

Nach Ausführungsformen wird die ausgewählte Merkmalskombination einem die Authentifizierung ausführenden Computersystem in kryptographisch gesicherter Form zur Verfügung gestellt. Ausführungsformen können den Vorteil haben, dass die ausgewählte Merkmalskombination so effizient vor unberechtigten Zugriffen geschützt werden kann. Nach Ausführungsformen umfasst die bereitgestellte Merkmalskombination die referenzwerte für die einzelnen Merkmale.

Ausführungsformen umfassen ferner ein Computersystem, welches konfiguriert ist zum Ausführen eines Verfahren nach einer der zuvor genannten Ausführungsformen. Nach Ausführungsformen umfasst das Computersystem ein Nutzer-Computersystem. Nach Ausführungsformen ist der Authentifizierungsdienst in dem Nutzer-Computersystem implementiert. Nach weiteren Ausführungsformen umfasst das Computersystem ein eigenständiges Authentifizierungsdienst-Computersystem in welchem der Authentifizierungsdienst implementiert ist und welches mit dem Nutzer-Computersystem beispielsweise über ein Netzwerk kommuniziert. Ferner kann das Nutzer-Computersystem ein oder mehrere Sensorgeräte umfassen und/oder es können ein oder mehrere eigenständige Sensorgeräte vorgesehen sein, welche mit dem Nutzer-Computersystem und/oder dem Authentifizierungsdienst-Computersystem kommunizieren, beispielsweise jeweils über ein Netzwerk. Zudem kann ein Dienst-Computersystem eines Dienstanbieters vorgesehen sein, gegenüber dem sich der Nutzer authentifizieren möchte. Beispielsweise umfasst das Dienst-Computersystem einen Server, welcher über ein Netzwerk erreichbar ist, oder ein terminal, welches über eine kontaktlose Kommunikationsverbindung erreichbar ist.

Im Weiteren werden Ausführungsformen der Erfindung mit Bezugnahme auf die Zeichnungen näher erläutert. Es zeigen:
- Figur 1: ein Blockdiagramm einer ersten Ausführungsform exemplarischer Computersysteme,
- Figuren 2: Blockdiagramme einer zweiten Ausführungsform exemplarischer Computersysteme,
- Figur 3: ein Blockdiagramm einer dritten Ausführungsform exemplarischer Computersysteme,
- Figur 4: ein Flussdiagramm einer ersten Ausführungsform eines exemplarischen Verfahrens,
- Figur 5: ein Flussdiagramm einer zweiten Ausführungsform eines exemplarischen Verfahrens und
- Figur 6: ein Flussdiagramm einer dritten Ausführungsform eines exemplarischen Verfahrens.

Elemente der nachfolgenden Ausführungsformen, die einander entsprechen, werden mit denselben Bezugszeichen gekennzeichnet.

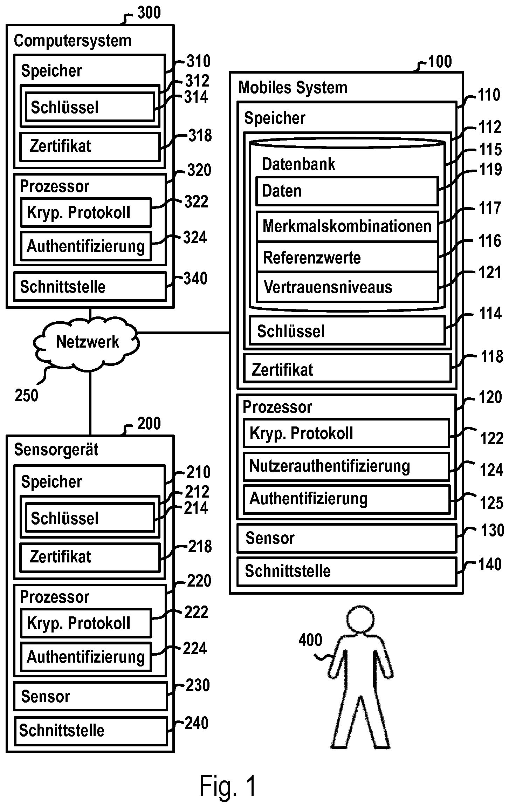

Die Figur 1 zeigt ein exemplarisches Nutzercomputersystem 100 eines Nutzers 400, bei welchem es sich beispielsweise um ein mobiles Kommunikationssystem 100 wie etwa ein Smartphone des Nutzers 400 handelt. Nach weiteren Ausführungsformen kann es sich bei dem Nutzercomputersystem 100 auch um ein stationäres Computersystem, wie etwa einen Personalcomputer handeln. Dieses Kommunikationssystem 100 ist dazu konfiguriert als Authentifizierungsdienst zu dienen bzw. ein Authentifizierungsdienst ist in diesem Kommunikationssystem 100 implementiert. Dabei ist das Kommunikationssystem 100 dazu konfiguriert eine Datenbank 115 zu erstellen, Merkmalskombinationen 117 zu extrahieren, eine Authentifizierung unter Verwendung einer dynamisch ausgewählten Merkmalskombination 117 auszuführen, und im Falle einer erfolgreichen Authentifizierung des Nutzers 400 einen Authentifizierungstoken zu erzeugen, welcher die erfolgreiche Authentifizierung bestätigt. Bei dem mobilen Kommunikationssystem 100 kann es sich beispielsweise um ein mobiles Telekommunikationsgerät, insbesondere ein Smartphone, einen tragbaren Computer, wie zum Beispiel einen Laptop oder Palmtop-Computer, einen Personal Digital Assistant oder dergleichen handeln. Das mobile Kommunikationssystem 100 hat eine Schnittstelle 140 zur Kommunikation mit einem oder mehreren externen Sensorgeräten 200, welche jeweils eine entsprechende Schnittstelle 240 aufweisen. Die Kommunikation kann kabellos oder über ein Kabel erfolgen. Bei einer kabellosen Verbindung kann es sich insbesondere um eine Nahfeldkommunikation, beispielsweise mittels RFID, Bluetooth oder WLAN handeln. Beispielsweise erfolgt die Kommunikation entsprechend der Norm ISO 14443 drahtlos mit einer Frequenz von 13,56 MHz. Beispielsweise erfolgt die Kommunikation über ein Netzwerk, bei dem es sich um ein öffentliches Computernetzwerk, wie etwa das Internet, oder ein Intranet handeln kann. Ferner kann die Schnittstelle 140 zur Kommunikation mit einer entsprechenden Schnittstelle 340 eines Computersystems 300 konfiguriert sein. Bei dem Computersystems 300 kann es sich beispielsweise um ein Dienst-Computersystem eines Dienstanbieters handeln. Möchte der Nutzer 400 einen von dem Dienstanbieter angebotenen Dienst in Anspruch nehmen setzt dies beispielsweise eine Authentifizierung des Nutzers 400 gegenüber dem Dienstcomputersystem 300 voraus. Die Kommunikation kann beispielsweise auf dieselbe Weise wie mit dem Sensorgerät 200 oder nach einem anderen der zuvor genannten Verfahren erfolgen.

Das mobiles Kommunikationssystem 100 umfasst zumindest einen Prozessor 120 zur Ausführung von Programminstruktionen 124. Die Programminstruktionen 124 implementieren beispielsweise den Authentifizierungsdienst und dienen zur Nutzerauthentifizierung, d.h. zur Authentifizierung des Nutzers 400 durch das mobiles Kommunikationssystem 100. Das mobile Kommunikationssystem 100 umfasst ferner einen elektronischen Speicher 110 mit einem geschützten Speicherbereich 112. Der geschützte Speicherbereich 112 dient zur Speicherung einer Datenbank 115 mit Daten 119, welche das mobile Kommunikationssystem 100 von eigenständigen Sensorgeräten 200 und/oder von Sensorgeräten bzw. Sensoren 130 des Kommunikationssystem 100 selbst empfängt. Ferner umfasst die Datenbank 115 Merkmalskombinationen 117, welche durch Verwendung der Programminstruktionen 124 aus den Daten 119 extrahiert werden. Zudem umfasst die Datenbank 115 den Merkmalen der Merkmalskombinationen 117 zugeordnete Referenzwerte 116, die zur Authentifizierung des Nutzers 400 durch das mobile Kommunikationssystem 100 dienen. Schließlich kann die Datenbank 115 den Merkmalskombinationen 117 Beispielsweise durch die Programminstruktionen 124 zugeordnete Vertrauensniveaus 121 umfassen. Die Vertrauensniveaus 121 basierend auf einer statistischen Wahrscheinlichkeit dafür, dass ein anderer Nutzer als der zu authentifizierende Nutzer 400 eine identische Merkmalskombination mit identischen Referenzwerten aufweist. Der geschützte Speicherbereich 112 dient ferner zur Speicherung eines privaten Schlüssels 114, welcher dem mobilen Kommunikationssystem 100 zugeordnet ist.

In dem elektronische Speicher 110 kann ferner ein Zertifikat 118 gespeichert sein. Das Zertifikat 118 beinhaltet einen öffentlichen Schlüssel, der dem in dem geschützten Speicherbereich 112 gespeicherten privaten Schlüssel 114 zugeordnet ist. Das Zertifikat 118 kann nach einem Public Key Infrastruktur (PKI) Standard erstellt worden sein, beispielsweise nach dem X.509 Standard.

Durch Ausführung der Programminstruktionen 124 erfolgt beispielsweise eine initiale Registrierung des Nutzers 400 gegenüber dem durch die Programminstruktionen 124 bereitgestellten Authentisierungsdienst. Ferner erfolgt eine Anmeldung bzw. Erfassung der Sensorgeräte 200, 130, welche Daten 119 für die Ermittlung von Merkmalskombinationen 117 sowie für die Authentifizierung des Nutzer 400 bereitstellen. Von den Sensorgeräten 200, 130 werden kryptographisch gesicherte Daten 119 empfangen und in der Datenbank 115 gespeichert. Die kryptographische Sicherung umfasst beispielsweise eine Verschlüsselung der Daten 119 mit einem öffentlichen kryptographischen Schlüssel des mobilen Kommunikationsgeräts 100 und/oder eine Signatur mit den privaten Schlüsseln 214 der Sensorgeräte 200, 214, und/oder eine Speicherung in dem geschützten Speicherbereich 112 des Speichers 110. Aus den gespeicherten Daten 119 werden Merkmalskombinationen 117 und den Merkmalen der Merkmalskombination 117 zugeordnete Referenzwerte 116 extrahiert. Den einzelnen Merkmalskombinationen 117 werden Vertrauensniveaus 121 zugeordnet basierend auf einer statistischen Wahrscheinlichkeit dafür, dass ein anderer Nutzer eine identische Merkmalskombination 117 mit identischen Referenzwerten 116 aufweist. Auf den Empfang einer Authentifizierungsanfrage hin, beispielsweise von dem Computersystem 300, erfolgt eine dynamische Auswahl einer Merkmalskombination, welche der Nutzer 400 für eine erfolgreiche Authentifizierung nachzuweisen hat, unter Verwendung der den Merkmalkombinationen 117 zugeordneten Vertrauensniveaus 121, für welche von den Sensoren 130 und 230 des mobilen Kommunikationsgeräts 100 bzw. des Sensorgeräts 200 Messwerte abgefragt werden. Die empfangenen Messwerte werden mit den Referenzwerten 116 in dem geschützten Speicherbereich 112 verglichen und ein Authentifizierungsgrad des Nutzers 400 bestimmt. Falls der bestimmte Authentifizierungsgrad über einem Schwellenwert für eine erfolgreiche Authentifizierung liegt, wird durch das mobile Kommunikationsgerät 100 ein Authentisierungstoken zur Bestätigung der erfolgreichen Authentifizierung des Nutzers 400 erzeugt.

Die Vertrauenswürdigkeit des mobilen Kommunikationssystem 100 kann durch ein Sicherheitsmodul zusätzlich erhöht werden. Ein solches Sicherheitsmodul des mobilen Kommunikationssystems 100 kann beispielsweise als TPM ausgebildet sein. Alternativ oder zusätzlich kann das mobile Kommunikationssystem 100 teilweise oder insgesamt als HSM ausgebildet sein.

Nach Ausführungsformen können die Sensoren 130, 230 beispielsweise zur Erfassung eines biometrischen Merkmals des Nutzers 400 konfiguriert sein, insbesondere zu einer vollautomatischen Erfassung. Bei dem biometrischen Merkmal kann es sich beispielsweise um ein Beschleunigungsmuster, Herzschlagfrequenz, Venenmuster, Irismuster, Retinamuster, Stimmenmuster, Gangmuster, Tastaturdynamik, Unterschriftmuster, Berührungsmuster bei der Handhabung und/oder Fingerabdruck. Hierzu handelt es sich bei einem der Sensoren 130, 230 des mobilen Kommunikationsgeräts 100 und/oder des Sensorgeräts 200 beispielsweise um einen Beschleunigungssensor, Pulsmesser, Berührungssensor, beispielsweise in Form eines Touchscreens, und/oder einen Fingerabdrucksensor, welcher vorzugsweise in einem Bereich angeordnet ist, in dem bei einer bestimmungsgemäßen Verwendung des mobilen Kommunikationsgeräts 100 bzw. des Sensorgeräts 200 üblicherweise ein Finger des Nutzers 400 aufgelegt wird.

Nach Ausführungsformen können die Sensoren 130, 230 als Nutzerschnittstellen zum Empfang von eingaben des Nutzers als Messwerte konfiguriert sein. Nach weiteren Ausführungsformen können die Sensoren 130, 230 zum Überwachen und Protokollieren von Zuständen und/oder Zustandsänderungen von dem Nutzer zugeordneten Computersystemen konfiguriert sein. Nach Ausführungsformen können die Sensoren 130, 230 zum Erfassen einer Position und/oder Uhrzeit konfiguriert sein.

Die von dem Sensor 230 erfassten Daten bzw. Messwerte werden durch Ausführung der Programminstruktionen 124 beispielsweise über einen kryptographisch gesicherten Kommunikationskanal von dem entsprechenden Sensorgerät 200 an das mobile Kommunikationssystem 100 übertragen und in der Datenbank 115 gespeichert. Im Zuge einer Authentifizierung des Nutzer 400 werden die Messwerte mit den in der Datenbank 115 gespeicherten Referenzwerten 116 der für die Authentifizierung ausgewählten Merkmalskombination verglichen.

Eine Authentifizierung des Sensorgeräts 200 erfolgt durch Ausführen der Programminstruktionen 125 seitens des mobilen Kommunikationssystems 100 und der Programminstruktionen 224 seitens des Sensorgeräts 200. Zur gesicherten Datenübertragung weist das mobile Kommunikationssystem 100 ein kryptographischen Protokoll 122 auf, beispielsweise zum Ausführen eines Challenge-Response-Protokoll basierend auf einem symmetrischen Schlüssel oder einem asymmetrischen Schlüsselpaar. Das Sensorgerät 200 weist ein entsprechendes kryptographisches Protokoll 222 auf, ebenso wie das Computersystem 300 mit dem kryptographischen Protokoll 322.

Das Sensorgerät 200 umfasst ferner eine Schnittstelle 240 zur Kommunikation mit der Schnittstelle 140 des mobilen Kommunikationssystems 100. Zudem umfasst das Sensorgerät 200 einen Speicher 210, in welchem ein dem Sensorgerät 200 zugeordneter privater Schlüssel 214 sowie ein entsprechendes Zertifikat 218 gespeichert ist. Das Zertifikat 218 umfasst beispielsweise einen dem privaten Schlüssel 214 zugeordneten öffentlichen Schlüssel. Der private Schlüssel 214 ist vorzugsweise in einem geschützten Speicherbereich 212 des Speichers 210 gespeichert. Auch bei diesem Zertifikat 218 kann es sich beispielsweise um ein Zertifikat nach einem PKI-Standard, wie zum Beispiel X.509 handeln.

Darüber hinaus umfasst das Sensorgerät 200 zumindest einen Prozessor 220 zur Ausführung von Programminstruktionen 224. Durch Ausführung der Programminstruktionen 224 erfolgt die Authentifizierung des Sensorgeräts 200 gegenüber dem mobilen Kommunikationssystem 100 unter Verwendung des kryptographischen Protokolls 222.

Durch erfolgreiche Ausführung der Programminstruktionen 324 unter Verwendung des kryptographischen Protokolls 322 erfolgt eine Authentifizierung des Computersystems 300 gegenüber dem mobilen Kommunikationssystem 100.

Eine Datenübertragung zwischen dem mobilen Kommunikationssystem 100 und dem Sensorgerät 200 kann ebenso wie eine Datenübertragung zwischen dem mobilen Kommunikationssystem 100 und dem Computersystem 300 mittels Ende-zu-Ende-Verschlüsselung gesichert sein. Für die Ende-zu-Ende-Verschlüsselung kann ein symmetrischer Schlüssel verwendet werden, der beispielsweise anlässlich der Ausführung der kryptographischen Protokolle 122 und 222 bzw. 322 zwischen dem mobilen Kommunikationssystem 100 und Seensorgeräten 200 bzw. dem Computersystem 300 vereinbart wird. Prinzipiell kann jedes vorbekannte Verfahren zur Vereinbarung des symmetrischen Schlüssels für die Ende-zu-Ende-Verschlüsselung verwendet werden, wie zum Beispiel ein Diffie-Hellman-Schlüsselaustausch. Für die Schlüsselverteilung kann beispielsweise ein asymmetrisches Verschlüsselungsverfahren verwendet werden. Unter Verwendung einer hybriden Verschlüsselung wählt beispielsweise entweder das mobile Kommunikationssystem 100 oder dem Sensorgerät 200 bzw. dem mobilen Kommunikationssystem 100 einen zufälligen symmetrischen Schlüssel zum symmetrischen Verschlüsseln von zu schützenden Daten aus, welche über eine Ende-zu-Ende-verschlüsselte Verbindung übertagen werden sollen. Zur sicheren Übertragung an die andere Partei wird der symmetrische Schlüssel mit einem öffentlichen Schlüssel des Empfängers verschlüsselt, sodass dieser den symmetrischen Schlüssel mit einem dem öffentlichen Schlüssel zugeordneten privaten Schlüssel nach Empfang entschlüsseln kann.

Bei dem Computersystem 300 kann es sich beispielsweise um ein Dienst-Computersystem eines Dienstanbieters, beispielsweise einen entfernten Server oder ein lokales Terminal, oder um ein einen (weiteren) Nutzercomputer des Nutzer 400 handeln. Je nach der Art des beauftragten oder bestellten Produkts, der Dienstleistung oder nachgefragten Funktionalität verlangt das Computersystem 300 eine Authentifizierung des Nutzers 400 mit einem von dem zu erzielenden Sicherheitsniveau abhängigen Vertrauensniveau. Nur wenn diese Authentifizierung erfolgreich durchgeführt und beispielsweise mittels eines entsprechenden Authentifizierungstokens bestätigt wurde, wird eine Anfrage des Nutzers 400 entgegengenommen und/oder ausgeführt. Um ein entsprechendes Authentifizierungstoken zu erlangen sendet das Computersystem 300 eine Authentifizierungsanfrage an das mobile Kommunikationssystem 100.

Beispielsweise kann es für eine Sicherheitskontrolle am Flughafen erforderlich sein, dass der Nutzer 400 seine Identität gegenüber dem Computersystem 300 offenbart, welches den Zutritt zum Gate kontrolliert, und dass diese Identität überprüft wird. Im Stand der Technik muss der Nutzer 400 hierzu beispielsweise seinen Personalausweis vorlegen. Dieser Vorgang wird durch das Bereitstellen der digitalen Identität des Nutzers 400 mittels des mobilen Kommunikationssystems 100 ersetzt. Nach erfolgreicher Authentifizierung des Nutzers 400 erzeugt das mobile Kommunikationssystems 100 ein Authentifizierungstoken, welcher die erfolgreiche Authentifizierung des Nutzers 400 durch das mobiles Kommunikationssystems 100 bestätigt und dessen Identität, z.B. Namen, angibt. Entsprechende Attribute, wie etwa der Name des Nutzers 400 sind beispielsweise in dem geschützten Speicherbereich 112 des Speichers 110 gespeichert. Dabei können die von dem Authentifizierungstoken umfassten Attribute verschieden sein, von den für die Authentifizierung nachzuweisenden Merkmalen.

Je nach Anwendungsfall muss der Nutzer 400 aber nicht seine Identität gegenüber dem Computersystem 300 offenbaren, sondern es reicht die Mitteilung beispielsweise eines einzelnen Attributs aus. Beispielsweise kann der Nutzer 400 über ein in dem geschützten Speicherbereich 112 gespeichertes Attribute einen Nachweis erbringen, dass er zu einer bestimmten Personengruppe gehört, die zugriffsberechtigt für eine von dem Computersystem 300 bereitgestellte Funktionalität ist. Beispielsweise kann ein solches Kriterium die Zugehörigkeit des Nutzers 400 zu einem Personenkreis sein, der zugangsberechtigt zu einem gesicherten Bereich ist, zu welchem der Zutritt durch das Computersystem 300 kontrolliert wird.

Zur Erstellung der Datenbank durch das mobile Kommunikationssystem 100 wird beispielsweise wie folgt vorgegangen:

### 1. Initiale Registrierung des Nutzers 400

Hierzu registriert sich der Nutzer 400 auf dem mobilen Kommunikationssystem 100. Nach Ausführungsformen erfolgt die Registrierung durch Anlegen eines Nutzerprofils über eine Nutzerschnittstelle des mobilen Kommunikationssystem 100. Nach einer weiteren Ausführungsform erfolgt die Registrierung beispielsweise unter Verwendung eines ID-Tokens. Beispielsweise werden von dem ID-Token Attribute des Nutzer 400, etwa in signierter Form zum Beleg ihrer Authentizität, direkt an das mobilen Kommunikationssystem 100, etwa über eine kryptographisch verschlüsselte Kommunikationsverbindung. Nach weiteren Ausführungsformen werden die Attribute von einem ID-Provider-Computersystem (nicht gezeigt), welches über entsprechende Berechtigungszertifikate verfügt, aus dem ID-Token ausgelesen und dem mobilen Kommunikationssystem 100, etwa in signierter Form über eine kryptographisch verschlüsselte Kommunikationsverbindung, von dem ID-Provider-Computersystem bereitgestellt.

### 2. Anmelden von Sensorgeräten zum Erfassen von Daten für den Authentifizierungsdienst

Hierzu werden beispielsweise in Kommunikationsreichweite befindlichen Sensorgeräte 130, 200 erfasst, d.h. Sensorgeräte, welche über ein Kabel oder kabellos in Kommunikationsverbindung mit dem mobilen Kommunikationssystem 100 stehen und/oder auf welche das mobilen Kommunikationssystem 100 Zugriffsrechte besitzt. Die Sensorgeräte umfassen insbesondere auch Sensorgeräte 130 bzw. Sensoren, welche von dem mobilen Kommunikationssystem 100 selbst umfasst sind. Die entsprechenden Sensorgeräte 130, 200 können beispielsweise bereits an dem mobilen Kommunikationssystem 100 angemeldet sein. In diesem Fall wird die Anmeldung an dem mobilen Kommunikationssystem 100 erfasst und für den Authentifizierungsdienst übernommen.

### 3. Sammeln von Daten

Von den Sensoren 200 Sensorgeräten 200 erfasste Daten 119 werden in kryptographisch gesicherter Form von dem mobilen Kommunikationssystem 100 empfangen und in der Datenbank 115 zur weiteren Auswertung gespeichert. Beispielsweise werden die Daten über eine Ende-zu-Ende-verschlüsselte Verbindung von den Sensorgeräten 200 empfangen. Von den Sensoren des mobilen Kommunikationssystems 100 empfangene Daten werden nach Ausführungsformen auch ohne zusätzliche kryptographische Sicherung an die Datenbank 155 übermittelt, solange sich die Übermittlung ausschließlich innerhalb des mobilen Kommunikationssystems 100 erfolgt. Daten 119 werden von den Sensoren 130, 230 beispielsweise fortwährend in vordefinierten Zeitintervallen und/oder ereignisinduziert erfasst.

### 4. Extrahieren von Merkmalskombinationen

Aus den in der Datenbank 115 gespeicherten Daten 119 werden Merkmalskombinationen 117 extrahiert, welche für den Nutzer 400 charakteristisch sind. Das Erkennen von charakteristischen Mustern in den Daten 119, welche charakteristische Merkmalskombinationen 117 bereitstellen, umfasst beispielsweise maschinelle Mustererkennung bzw. nichtüberwachtes Lernen (engl. "unsupervised learning"), bei welchen relevante Merkmale und/oder Kombinationen derselben nicht vorgegeben sind, sondern erlernt werden. Nach Ausführungsformen kann auch ein überwachtes Lernen (engl. "supervised learning") zum Einsatz kommen, wobei bestimmte Merkmale und/oder Kombinationen derselben vorgegeben werden, beispielsweise durch Stichproben. Dabei können im Falle eines bestärkenden Lernens (engl. "reinforcement learning") Informationen, beispielsweise durch den Nutzer 400, d.h. dem Eigentümer der Daten, hinzukommen, ob eine erlernte Merkmalskombination korrekt bzw. passen ist oder nicht.

Durch maschinelles Lernen können also Strukturen und Gesetzmäßigkeiten in einer Datenmenge, den sog. Lerndaten, identifiziert werden. Durch maschinelles Lernen kann ein Computersystem, wie das mobilen Kommunikationssystems 100, auch unbekannte Daten analysieren und beurteilen. Beim nichtüberwachten Lernen werden keine Zielwerte vorgegeben. Das Computersystem versucht, in der Datenmenge eine Struktur bzw. ein Muster zu erkennen, welches von einem strukturlosen Rauschen abweicht. Ein Algorithmus zum nichtüberwachten maschinellen Lernen erzeugt für eine gegebene Datenmenge ein Modell, das die Struktur der Datenmenge beschreibt. Dabei werden beispielsweise Clustering-Verfahren verwendet, welche charakteristische Strukturen bzw. Muster erkennen und die Daten in entsprechende Klassen einteilen. Das Computersystem definiert somit selbständig Muster bzw. Merkmalskombinationen. Ein Beispiel für einen solches Clustering-Verfahren ist der sog. Expectation-Maximization-Algorithmus (EM-Algorithmus). Der EM-Algorithmus legt iterativ Parameter eines Modells bzw. Klassifikationsschemas so fest, dass die gesehenen Daten optimal erklärt werden. Dabei wird mit einem zufällig gewählten Modell gestartet und es wird versucht abwechselnd die Zuordnung der Daten zu den einzelnen Klassen des Modells (Expectation-Schritt) und die Parameter des Modells an die neueste Zuordnung (Maximization-Schritt) zu verbessern. Findet keine wesentliche Verbesserung mehr statt, wird das Verfahren beendet. Eine Anwendung des EM-Algorithmus findet sich beispielsweise in den Hidden Markov Models (HMMs). Weitere Beispiele für Clustering-Algorithmen sind K-Means-Algorithmen, fuzzy C-Means-Algorithmen, oder Affinity-Propagation-Algorithmen. Für das maschinelle Lernen können ferner künstliche neuronale Netz verwendet werden. Ein solches künstliche neuronale Netz orientiert sich beispielsweis an der Ähnlichkeit von Eingabedaten und adaptiert dementsprechend Gewichtungsfaktoren zwischen Neuronen des Netzes. Weitere Beispiele für nichtüberwachtes Lernen sind Deep Autoencoder, Survey Propagation (SP), Deep Belief Network (DBN), BayesNP, Hierarchischer Temporalspeicher (HTM), Autoencoder Neural Network, Sparse Coding, Restricted Boltzmann Machine (RBM), oder Gaussian Mixture Models (GMM).

Zudem werden für den Nutzer 400 den Merkmalen der Merkmalskombinationen 117 zugeordnete Referenzwerte 116 aus den gespeicherten Daten 115 extrahiert und den jeweiligen Merkmalen der Merkmalskombinationen 117 zugeordnet. Den extrahierten Merkmalskombinationen 117 werden Vertrauensniveaus 121 zugeordnet, welche jeweils auf einer statistischen Wahrscheinlichkeit dafür beruhen, dass ein anderer Nutzer eine identische Merkmalskombination mit identischen Referenzwerten aufweist. Merkmalskombinationen 117, Referenzwerte 116 und Vertrauensniveaus 121 werden beispielsweise ebenfalls in der Datenbank 115 gespeichert.

Zur Inanspruchnahme eines von dem Computersystem 300 zur Verfügung gestellten Dienstes oder zur Freigabe eines von dem Computersystem 300 kontrollierten Zutritts wird beispielsweise wie folgt vorgegangen:

### 1. Authentifizierung des Computersystems 300 gegenüber dem mobilen Kommunikationssystem 300.

Hierzu wird eine Verbindung zwischen dem mobilen Kommunikationssystem 100 und dem Computersystem 300 beispielsweise hergestellt. Beispielsweise überträgt das Computersystem 300 sein Zertifikat 318 an das mobile Kommunikationssystem 100. Durch Ausführen des kryptographische Protokolls 122 wird dann durch das mobile Kommunikationssystem 100 eine so genannte Challenge generiert, d.h. beispielsweise eine Zufallszahl. Diese Zufallszahl wird mit dem in dem Zertifikat 318 beinhalteten öffentlichen Schlüssel des Computersystems 300 verschlüsselt. Das resultierende Chiffrat wird von dem mobilen Kommunikationssystem 100 über die Verbindung an das Computersystem 300 gesendet. Durch Ausführen des kryptographische Protokolls 322 entschlüsselt das Computersystem 300 das Chiffrat mit Hilfe seines dem öffentlichen Schlüssel des Zertifikats 318 zugeordneten privaten Schlüssels 314 und erhält so die Zufallszahl. Die Zufallszahl sendet das Computersystem 300 an das mobiles Kommunikationssystem 100, ggf. kombiniert mit einem gemeinsamen Geheimnis, zurück. Durch Ausführung des Protokolls 122 wird dort geprüft, ob die von dem Computersystem 300 empfangene Zufallszahl mit der ursprünglich generierten Zufallszahl, d.h. der Challenge, übereinstimmt. Ist dies der Fall, so gilt das Computersystem 300 als gegenüber dem mobilen Kommunikationssystem 100 authentifiziert. Die Zufallszahl kann als symmetrischer Schlüssel für eine Ende-zu-Ende-Verschlüsselung verwendet werden. Nach Ausführungsformen umfasst das Verfahren zudem eine Authentifizierung des mobilen Kommunikationssystems 100 durch das Computersystem 300, beispielsweise unter Verwendung des Zertifikats 118 und des zugeordneten privaten Schlüssels 114. Die Authentifizierung des mobilen Kommunikationssystems 100 kann beispielsweise analog zu der Authentifizierung des Computersystems 300 erfolgen.

### 2. Authentifizierung des Nutzers 400 durch das mobile Kommunikationssystem 100.

Das Computersystems 300 sendet eine Authentifizierungsanfrage an das mobile Kommunikationssystem 100. Der Nutzer 400 wird daraufhin durch das mobile Kommunikationssystem 100 authentifiziert. Hierzu wird eine für eine erfolgreiche Authentifizierung des Nutzers 400 nachzuweisende Merkmalskombination 117 dynamische unter Verwendung der den Merkmalkombinationen 117 zugeordneten Vertrauensniveaus 121 ausgewählt. Das Vertrauensniveau der auszuwählenden Merkmalkombination bzw. eine Vertrauensklasse, in welcher das entsprechende Vertrauensniveau liegen soll, kann beispielsweise durch die Authentifizierungsanfrage vorgegeben bzw. eingeschränkt sein. Dieses Vertrauensniveau bzw. diese Vertrauensklasse kann beispielsweise auch aus einem Kontext der Authentifizierungsanfrage abgeleitet werden. Dabei richtet sich das zu erzielende Vertrauensniveau nach dem Maß an Sicherheit, welches die Authentifizierung des Nutzers 400 bieten soll. Je höher das zu erzielende Maß an Sicherheit ist, desto höher ist das zu erzielende Vertrauensniveau. Für die nachzuweisenden Merkmale werden Messwerte von den Sensoren 130, 230 abgefragt. Dazu authentifizieren sich beispielsweise das mobile Kommunikationssystem 100 und das Sensorgerät 200 gegenseitig, falls sie aktuelle nicht ohnehin im Zuge der Übertragung von Daten zum Speichern in der Datenbank gegenseitig authentifiziert sind. Diese Authentifizierung kann analog zu der Authentifizierung zwischen dem mobilen Kommunikationssystem 100 und dem Computersystem 300 erfolgen. Dazu sind beispielsweise zusammen mit den Referenzwerten 116 Daten gespeichert, auf Basis deren die Sensoren identifiziert werden können, welche die entsprechenden Messwerte erfassen können. Die abgefragten Messwerte werden von den Sensoren 130, 230 an das mobile Kommunikationssystem 100 bzw. innerhalb des mobile Kommunikationssystem 100 übertragen. Die Messwerte werden mit den Referenzwerten 116 der ausgewählten Merkmalskombination verglichen und es wird ein Authentifizierungsgrad des Nutzers unter Verwendung des Grads der Übereinstimmungen zwischen den Messwerten und den Referenzwerten bestimmt.

### 3. Erzeugen und Senden eines Authentifizierungstokens durch das mobile Kommunikationssystem 100.

Falls der bestimmte Authentifizierungsgrad über dem Schwellenwert für eine erfolgreiche Authentifizierung liegt, wird durch das mobile Kommunikationssystem 100 Authentisierungstoken erzeugt und an das Computersystem 300 zur Bestätigung einer erfolgreichen Authentifizierung des Nutzers 400 versandt. Der Authentifizierungstoken enthält beispielsweise ein oder mehrere Attribute des authentifizierten Nutzers 400. Ferner umfasst das Authentifizierungstoken beispielsweise den für den Nutzer 400 bestimmten Authentifizierungsgrad. Zudem kann das Authentifizierungstoken beispielsweise angeben, auf welcher Merkmalskombination der ermittelte Authentifizierungsgrad beruht und/oder welches Vertrauensniveau der entsprechenden Merkmalskombination zugeordnet ist. Diese von dem Authentifizierungstoken umfassten Daten werden durch das mobile Kommunikationssystem 100 mit Hilfe des privaten Schlüssels 114 signiert und an das Computersystem 300 übertragen. Dadurch wird das Computersystem 300 über die durch das Kommunikationssystem 100 ausgeführte Authentifizierung sowie die ausgelesenen Attribute in Kenntnis gesetzt, sodass das Computersystem 300 diese Attribute prüfen kann, um danach ggf. den von dem Nutzer 400 angeforderten Dienst zu erbringen. Nach Ausführungsbeispielen umfasst das Zertifikat 318 des Computersystems 300 einen Berechtigungsnachweis des Computersystems 300 zu einem Zugriff auf die entsprechenden Attribute.

Durch die Authentifizierung des Nutzers 400 durch das mobile Kommunikationssystem 100 und die gegenseitige Authentifizierung zwischen dem Computersystem 300 und dem mobilen Kommunikationssystem 100 wird der notwendige Vertrauensanker geschaffen, sodass das Computersystem 300 sicher sein kann, dass die Authentifizierung des Nutzer 400 durch das mobile Kommunikationssystem 100 zuverlässig ist. Zudem kann das Computersystem 300 Attribute des Nutzer 400 erhalten, deren Authentizität von dem mobilen Kommunikationssystem 100 bezeugt wird.

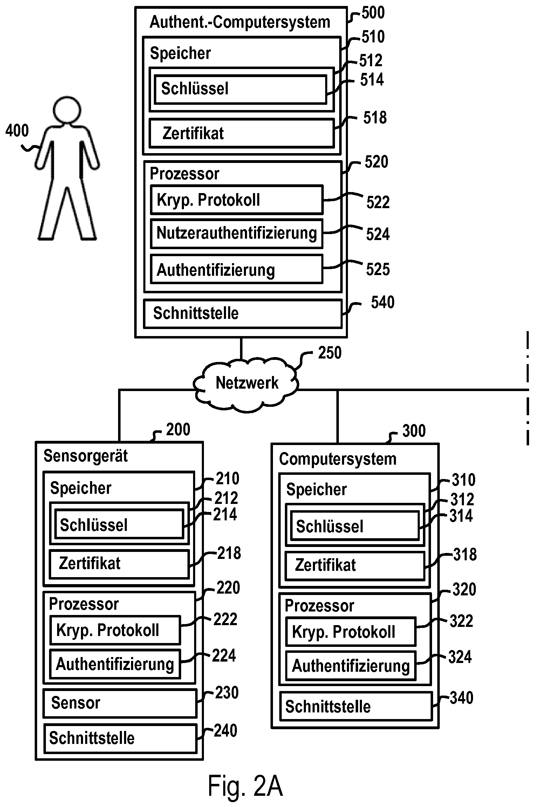

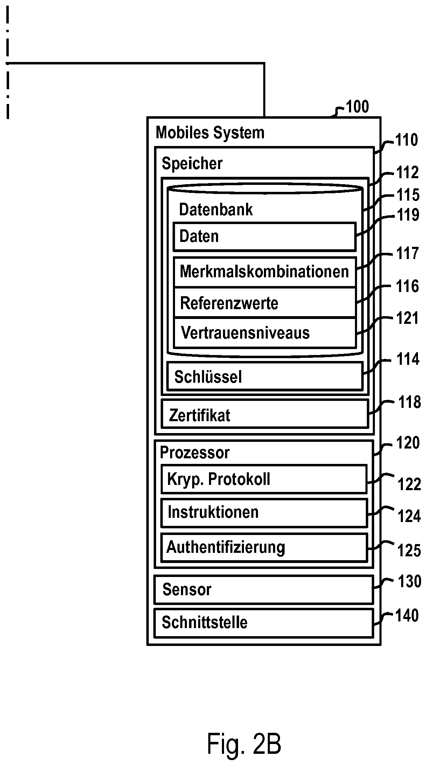

Die Figuren 2A und 2B zeigen eine zweite beispielhafte Ausführungsform. In dem in den Figuren 2A und 2B gezeigten Fall erfolgt die Nutzerauthentifizierung durch ein stationäres Authentifizierungsdienst-Computersystem 500. Dieses Authentifizierungsdienst-Computersystem 500 kann beispielsweise einem zentralen Authentifizierungsdienstservice zugeordnet und in Form eines über das Netzwerk 250 erreichbaren Servers in einer Client-Server-Umgebung bereitgestellt sein. Alternativerweise kann es sich bei dem Authentifizierungsdienst-Computersystem 500 um ein (weiteres) dem Nutzer 400 zugeordnetes Nutzer-Computersystem handeln, welches beispielsweise als ein entfernter (remote) Server in einer Client-Server-Umgebung implementiert ist.

Zur Ausführung der Nutzerauthentifizierung umfasst das Authentifizierungsdienst-Computersystem 500 Programminstruktionen 524. Ferner umfasst das Computersystem 500 einen Speicher 510 mit einem geschützten Speicherbereich 512, in welchem ein beispielsweise dem zentralen Authentifizierungsdienstservice oder dem Nutzer 400 zugeordneter privater Schlüssel 514 gespeichert ist. In dem Speicher 510 ist ferner ein Zertifikat 518 des Authentifizierungsdienst-Computersystem 500 mit einem zu dem privaten Schlüssel 514 gehörigen öffentlichen Schlüssel gespeichert. Ferner umfasst das Authentifizierungsdienst-Computersystem 500 einen Prozessor 520 und eine Schnittstelle 540 sowie Programminstruktionen 525 zum Authentifizieren des Authentifizierungsdienst-Computersystem 500 gegenüber den anderen Systemen, d.h. Sensorgerät 200, mobiles Kommunikationssystem100 und Computersystem 300.

Gemäß der in den Figuren 2A und 2B gezeigten Ausführungsform erfolgt die Nutzerauthentifizierung durch das Authentifizierungsdienst-Computersystem 500, d.h. das Authentifizierungsdienst-Computersystem 500 empfängt eine Authentifizierungsanfrage von dem Computersystem 300, wählt eine nachzuweisende Merkmalskombination aus und fragt entsprechende Messwerte von den Sensoren 230, 130 des Sensorgeräts 200 bzw. des mobilen Kommunikationssystems 100 ab. Nach Ausführungsformen kann eine Mehrzahl von Sensorgeräten entsprechend dem Sensorgerät 200 vorgesehen sein.

Die Datenbank 115 mit den Daten 119, Merkmalskombinationen 117, Referenzwerten 116 und Vertrauensniveaus 121 werden in diesem Fall beispielsweise nicht durch das Authentifizierungsdienst-Computersystem 500, in welchem die Programminstruktionen 524 des Authentifizierungsdienstes gespeichert sind, sondern durch das mobile Kommunikationssystem 100 bereitgestellt. Das mobile Kommunikationssystem 100 umfasst beispielsweise Programminstruktionen 124 zum Sammeln von Daten und extrahieren von Merkmalskombinationen 117. Beispielsweise gibt das Authentifizierungsdienst-Computersystem 500 über eine kryptographisch gesicherte Verbindung, insbesondere eine mittels Ende-zu-Ende-Verschlüsselung geschützte Verbindung dem mobilem Kommunikationssystem 100 ein Vertrauensniveau oder eine Vertrauensklasse vor, welches bzw. welche einer für die Authentifizierung des Nutzers 400 zu verwendende Merkmalskombination zugeordnet sein soll. Auf eine dynamische Auswahl der Merkmalskombination hin werden dem Authentifizierungsdienst-Computersystem 500 beispielsweise über eine mittels Ende-zu-Ende-Verschlüsselung geschützte Verbindung die für die Authentifizierung ausgewählte Merkmalskombination übermittelt. Nach einer weiteren Ausführungsform werden die extrahierten Merkmalskombinationen 117 ggf. zusammen mit den zugeordneten Vertrauensniveaus von dem mobilem Kommunikationssystem 100 an das Authentifizierungsdienst-Computersystem 500 übertragen und dort gespeichert, sodass die dynamische Auswahl von Merkmalskombinationen durch das Authentifizierungsdienst-Computersystem 500 erfolgen kann. Solange die Referenzwerte 116 auf dem mobilen Kommunikationssystem 100 verbleiben, behält der Nutzer 400 die Verfügungshoheit über seien Daten 117. Zum Vergleichen der abgefragten Messwerte mit den Referenzwerten 116 der Merkmale der ausgewählten Merkmalskombination, werden beispielsweise die Referenzwerte 116 über eine kryptographisch gesicherte Verbindung, insbesondere eine mittels Ende-zu-Ende-Verschlüsselung geschützte Verbindung, zwischen dem Authentifizierungsdienst-Computersystem 500 und dem mobilem Kommunikationssystem 100 ausgelesen. Nach einer alternativen Ausführungsform, überträgt das Authentifizierungsdienst-Computersystem 500 die abgefragten Messwerte über eine kryptographisch gesicherte Verbindung, insbesondere eine mittels Ende-zu-Ende-Verschlüsselung geschützte Verbindung, an das mobilem Kommunikationssystem 100, welches einen Vergleich mit den Referenzwerten 116 durchführt und lediglich das Ergebnis an das Authentifizierungsdienst-Computersystem 500 überträgt. Das Ergebnis können entweder die Vergleichswerte für jeden einzelnen Messwert oder bereits der resultierende Authentifizierungsgrad sein. Im Falle einzelner Vergleichswerte bestimmt das Authentifizierungsdienst-Computersystem 500 den Authentifizierungsgrad. Nach einer weiteren Ausführungsform werden die abgefragten Messwerte direkt an das mobile Kommunikationssystem 100 übertragen bzw. von diesem auf eine Aufforderung des Authentifizierungsdienst-Computersystems 500 hin abgefragt und mit den Referenzwerten 116 verglichen. Falls der so bestimmte Authentifizierungsgrad über einem Schwellenwert für eine erfolgreiche Authentifizierung liegt, erzeugt das Authentifizierungsdienst-Computersystem 500 einen Authentisierungstoken zur Bestätigung einer erfolgreichen Authentifizierung des Nutzers 400 und sendet diesen an das Computersystem 300.

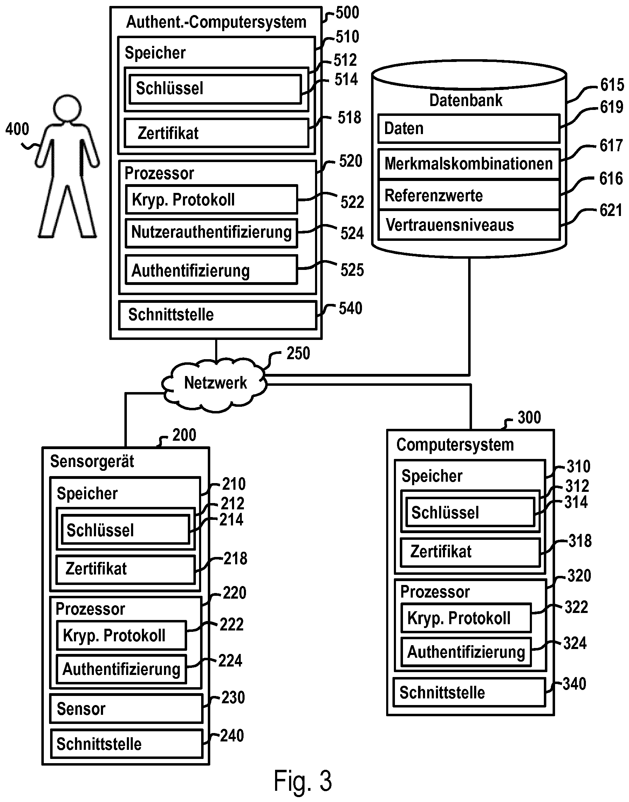

Die Figur 3 zeigt schließlich eine Ausführungsform entsprechend derjenigen aus Figuren 2A und 2B, jedoch ohne mobiles Kommunikationssystem 100. Die Nutzerauthentifizierung erfolgt wiederum durch das Authentifizierungsdienst-Computersystem 500. Die Daten 619, Merkmalskombinationen 617, Referenzwerte 616 und Vertrauensniveaus 621 werden durch eine Datenbank 615 bereitgestellt, welche Teil des Authentifizierungsdienst-Computersystem 500 sein kann, beispielsweise des Speichers 510, oder die als eigenständige Komponente bereitgestellt wird, auf welche das Authentifizierungsdienst-Computersystem 500 Zugriff besitzt. Beispielsweise wird die Datenbank 615 mittels eines Servers bereitgestellt, welcher in eine Server-Client-Umgebung des Netzwerks 250 eingebunden ist. Schließlich kann die Auswahl der Merkmalskombination für die Authentifizierung des Nutzers 400 und/oder der Vergleich zwischen Messwerten und Referenzwerten 616 wiederum entweder durch das Authentifizierungsdienst-Computersystem 500 durchgeführt werden, welches die entsprechenden Referenzwerten 616 aus der Datenbank 615 ausliest, sodass die Nutzerauthentifizierung ausschließlich durch das Authentifizierungsdienst-Computersystem 500 ausgeführt wird, oder durch die Datenbank 615 selbst, welche zu diesem Zwecke über entsprechende Programminstruktionen und zusätzliche Hardware verfügt.

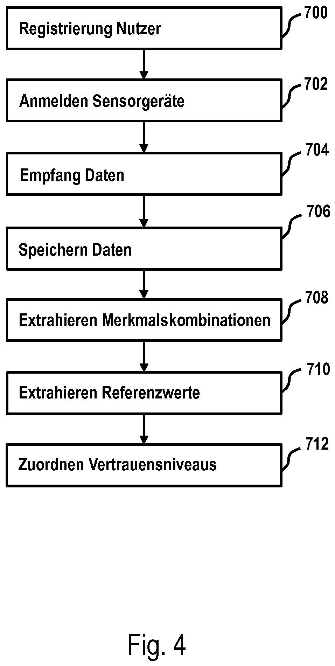

Die Figur 4 zeigt eine erste Ausführungsform eines exemplarischen Verfahrens. In Schritt 700 registriert sich der Nutzer gegenüber einem Authentifizierungsdienst, welcher beispielsweise in einem mobilen Kommunikationsgerät des Nutzers implementiert ist oder in einem Authentifizierungsdienst-Computersystem. Im Falle eines mobilen Kommunikationsgerät kann sich der Nutzer beispielsweise direkt über eine Eingabeschnittstelle des mobilen Kommunikationsgerät registrieren. Im Falle eines Authentifizierungsdienst-Computersystems kann die Registrierung beispielsweise mittels eines Nutzer-Computersystems, wie etwa einem mobilen Kommunikationsgerät, erfolgen, welches eine Eingabeschnittstelle bereitstellt und mit dem Authentifizierungsdienst-Computersystem beispielsweise über ein Netzwerk, wie etwa das Internet oder ein Intranet, verbunden ist. In Schritt 702 werden Sensorgeräte, welche Sensoren zum Erfassen von Daten bzw. Messwerten bereitstellen, für den Authentifizierungsdienst angemeldet. Der Authentifizierungsdienst kann somit erfassen, welche Sensoren Daten bereitstellen bzw. auf welche Sensoren er zur Erfassung von Daten zurückgreifen kann. In Schritt 704 werden von den Sensoren der Sensorgeräte erfasste Daten kryptographisch gesichert an das Computersystem mit dem Authentifizierungsdienst beispielsweise über eine Ende-zu-Endeverschlüsselte Verbindung übertragen und in Schritt 706 in einer kryptographisch gesicherten Datenbank gespeichert. In Schritt 708 werden aus den gespeicherten Daten Merkmalskombinationen extrahiert, welche für den Nutzer charakteristisch sind. Zudem werden in Schritt 710 Referenzwerte aus den gespeicherten Daten extrahiert, welche Merkmalen der für den Nutzer charakteristischen Merkmalskombinationen zugeordnet sind. In Schritt 712 werden Vertrauensniveaus zu den einzelnen Merkmalskombinationen basierend auf einer statistischen Wahrscheinlichkeit dafür zugeordnet, dass ein anderer Nutzer eine identische Merkmalskombination mit identischen Referenzwerten aufweist.

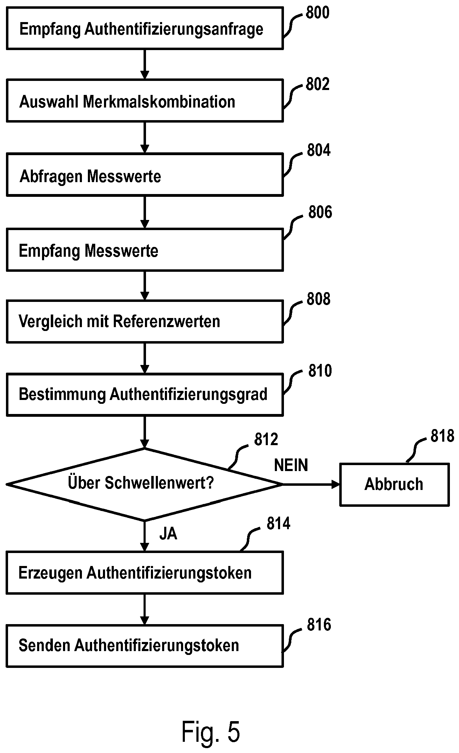

Die Figur 5 zeigt eine zweite Ausführungsform eines exemplarischen Verfahrens. In Schritt 800 wird eine Authentifizierungsanfrage empfangen. Hierzu wird eine Verbindung zwischen dem Authentifizierungsdienst in Form eines mobilen Kommunikationssystems oder eines stationären Authentifizierungsdienst-Computersystems und einem anfragenden Computersystem, beispielsweise ein Dienst-Computersystem, aufgebaut, wobei es sich bei der Verbindung vorzugsweise um eine gesicherte Verbindung handelt, beispielsweise nach einem so genannten Secure Messaging-Verfahren. Zudem erfolgt eine gegenseitige Authentifizierung zwischen Authentifizierungsdienst und Computersystem über die aufgebaute Verbindung. In Schritt 802 erfolgt eine Auswahl einer für eine erfolgreiche Authentifizierung des Nutzers nachzuweisende Merkmalskombination aus den extrahierten Merkmalskombinationen unter Verwendung der den Merkmalkombinationen zugeordneten Vertrauensniveaus. Das Vertrauensniveaus oder eine entsprechende Vertrauensklasse der auszuwählenden Merkmalskombination kann von der Authentifizierungsanfrage vorgegeben sein. Die Auswahl erfolgt beispielsweise unter allen Merkmalskombinationen, welchen ein entsprechendes Vertrauensniveau zugeordnet ist bzw. die in die entsprechende Vertrauensklasse fallen. Beispielsweise kann das Vertrauensniveau von dem Kontext, in dem die Authentifizierungsanfrage gestellt wird und der aus der Authentifizierungsanfrage selbst ablesbar ist, erfolgen. Nach Ausführungsformen kann die Authentifizierungsanfrage zusätzlich die auszuwählende Merkmalskombination hinsichtlich bestimmter Merkmale, die diese umfassen und/oder nicht umfassen soll, einschränken. Nach Ausführungsformen wird die ausgewählte Merkmalskombination dem die Authentifizierung anfragenden Dienstcomputersystem vorgeschlagen. In diesem Fall wird die ausgewählte Merkmalskombination erst zur Authentifizierung verwendet, wenn das die Authentifizierung anfragenden Dienstcomputersystem dem Vorschlag zugestimmt hat.

In Schritt 804 werden Messwerten der für die Authentifizierung nachzuweisenden Merkmalskombination von Sensoren abgefragt. Diese Sensoren werden beispielsweise von ein oder mehreren Sensorgeräten mit jeweils ein oder mehreren Sensoren bereitgestellt. Nach Ausführungsformen umfasst der Authentifizierungsdienst Daten; aus denen sich ergibt, welcher Sensor dazu konfiguriert und/oder vorgesehen ist Messwerte für welches Merkmal bereitzustellen. Nach weiteren Ausführungsformen werden entsprechende Daten von der Authentifizierungsanfrage bereitgestellt. In Schritt 806 werden die abgefragten Messwerte von den Sensoren bzw. Sensorgeräten empfangen. Hierzu werden gesicherte Verbindung, beispielsweise nach dem Secure Messaging-Verfahren, zwischen Authentifizierungsdienst und Sensorgeräten aufgebaut. Zudem erfolgt beispielsweise eine gegenseitige Authentifizierung zwischen Authentifizierungsdienst und Sensorgeräten über die aufgebaute Verbindung.

In Schritt 808 werden die empfangenen Messwerte mit den Referenzwerten der ausgewählten Merkmalskombination verglichen. In Schritt 810 wird der Authentifizierungsgrad des Nutzers unter Verwendung des Grads der Übereinstimmungen zwischen den Messwerten und den Referenzwerten bestimmt. In Schritt 812 wird geprüft, ob der Authentifizierungsgrad über einem Schwellenwert für eine erfolgreiche Authentifizierung liegt. Falls dies der Fall ist, wird in Schritt 814 ein Authentisierungstoken zur Bestätigung einer erfolgreichen Authentifizierung des Nutzers erzeugt und in Schritt 816 an die Instanz versandt, welche die Authentifizierungsanfrage gestellt hat oder an eine in der Authentifizierungsanfrage angegebene Instanz.

Falls der bestimmte Authentifizierungsgrad nicht über dem Schwellenwert für eine erfolgreiche Authentifizierung liegt, so wird in das Authentifizierungsverfahren in Schritt 818 abgebrochen.

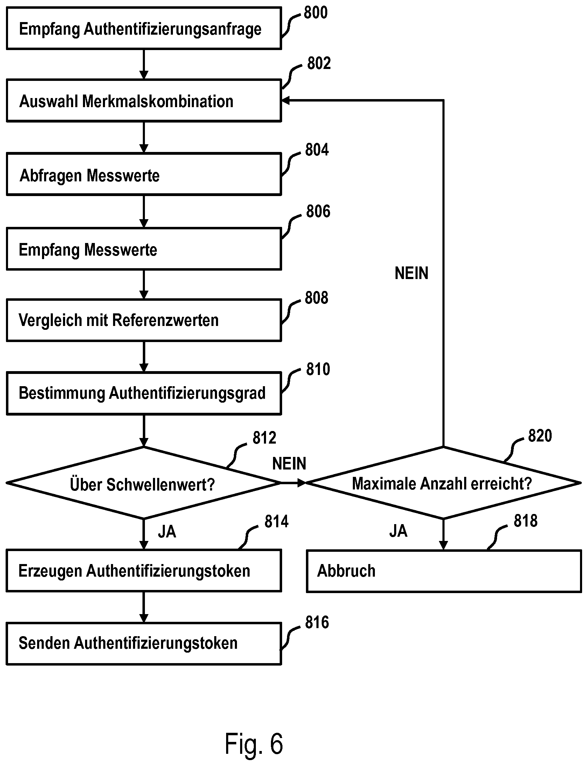

Die Figur 6 zeigt eine dritte Ausführungsform eines exemplarischen Verfahrens, welches zusätzlich zu den Schritten des Verfahren aus Figur 5 den Schritt 820 aufweist. Falls der bestimmte Authentifizierungsgrad nicht über dem Schwellenwert für eine erfolgreiche Authentifizierung liegt, wird in Schritt 820 geprüft, ob eine vordefinierte maximale Anzahl an Authentifizierungsversuchen erreicht ist. Ist die maximale Anzahl an Authentifizierungsversuchen noch nicht erreicht, wird das Verfahren in Schritt 802 mit der Auswahl einer neuen Merkmalskombination fortgesetzt. Ist die maximale Anzahl an Authentifizierungsversuchen erreicht, so wird das Verfahren in Schritt 818 abgebrochen.

Nach weiteren Ausführungsformen können Ersatzmerkmale vorgesehen sein. Falls der bestimmte Authentifizierungsgrad nicht über dem Schwellenwert für eine erfolgreiche Authentifizierung liegt, wird beispielsweise ein Ersatzmerkmal geprüft. Sind alle Ersatzmerkmale durchgeprüft kann beispielsweise das Verfahren in Schritt 802 mit der Auswahl einer neuen Merkmalskombination fortgesetzt werden.

Mögliche vorteilhafte Ausführungsformen umfassen die folgenden Merkmalskombinationen:
1. Verfahren zum Erstellen einer Datenbank für eine dynamische Multifaktorauthentifizierung eines Nutzers, wobei das Verfahren umfasst:
   - initiale Registrierung des Nutzers gegenüber einem Authentifizierungsdienst, welcher die Datenbank verwaltet,
   - Anmelden von Sensorgeräten von welchen Daten für den Authentifizierungsdienst erfasst und in der Datenbank als Grundlage für eine dynamische Multifaktorauthentifizierung gesammelt werden,
   - Empfang kryptographisch gesicherter Daten von den Sensorgeräten,
   - kryptographisch gesichertes Speichern der Daten in der Datenbank,
   - Extrahieren von Merkmalskombinationen und von den Merkmalen der Merkmalskombination zugeordneten Referenzwerten aus den gespeicherten Daten, welche für den Nutzer charakteristisch sind,
   - Zuordnen von Vertrauensniveaus zu den einzelnen Merkmalskombinationen basierend auf einer statistischen Wahrscheinlichkeit dafür, dass ein anderer Nutzer eine identische Merkmalskombination mit identischen Referenzwerten aufweist,
   - auf einen Empfang einer Authentifizierungsanfrage hin dynamische Auswahl einer Merkmalskombination, welche der Nutzer für eine erfolgreiche Authentifizierung nachzuweisen hat, unter Verwendung der den Merkmalkombinationen zugeordneten Vertrauensniveaus.
2. Verfahren nach Punkt 1, wobei bei zumindest einem der Merkmale der zugeordnete Referenzwert, in Abhängigkeit von der Merkmalskombination, in welcher das entsprechende Merkmal zur Authentifizierung des Nutzers verwendet wird, variiert.
3. Verfahren nach einem der vorhergehenden Punkte, wobei den Merkmalskombinationen ferner jeweils ein Signifikanzschema zugeordnet ist, welches einzelnen Merkmalen der jeweiligen Merkmalskombination jeweils einen Signifikanzwert zuweist.
4. Verfahren nach Punkt 3, wobei bei zumindest einem der Merkmale der zugewiesene Signifikanzwert, in Abhängigkeit von der Merkmalskombination, in welcher das entsprechende Merkmal zur Authentifizierung des Nutzers verwendet wird, variiert.
5. Verfahren nach einem der Punkte 3 bis 4, wobei die Zuordnung der Vertrauensniveaus unter Verwendung der Signifikanzwerte der Merkmale der jeweiligen Merkmalskombination erfolgt.
6. Verfahren nach einem der vorhergehenden Punkte, wobei das Vertrauensniveau durch die Authentifizierungsanfrage vorgegeben wird.
7. Verfahren nach einem der Punkte 1 bis 5, wobei das Vertrauensniveau unter Verwendung eines der Authentifizierungsanfrage zugeordneten Kontext bestimmt wird.
8. Verfahren nach einem der vorhergehenden Punkte, wobei das Vertrauensniveau unter Verwendung von zuvor innerhalb eines vorgegebenen Zeitraums erfolgten Authentifizierungsversuchen bestimmt wird.
9. Verfahren nach einem der vorhergehenden Punkte, wobei zumindest eine der Merkmalskombinationen auf Basis der statistischen Häufigkeit, mit welcher Merkmale in der entsprechenden Kombination in der Vergangenheit für den Nutzer erfasst wurden, erstellt wird.
10. Verfahren nach einem der vorhergehenden Punkte, wobei es sich bei zumindest einem der Referenzwerte um einen Erwartungswert handelt, welcher auf Basis eines dem Nutzer zugeordneten prädiktiven Modells bestimmt wurde.
11. Verfahren nach einem der vorhergehenden Punkte, wobei die Anzahl an Merkmalen je Merkmalskombination mindestens drei beträgt.
12. Verfahren nach einem der vorhergehenden Punkte, wobei die Vertrauensniveaus in Vertrauensklassen unterteilt sind und die Auswahl der Merkmalskombination aus den Merkmalskombinationen einer für die Authentifizierungsanfrage verwendeten Vertrauensklasse zufällig erfolgt.
13. Verfahren nach einem der Punkte 1 bis 11, wobei die Datenbank vordefinierte Merkmalskombinationen für einen vorbestimmten Kontextzusammenhang einer Authentifizierung festlegt.
14. Verfahren nach einem der vorhergehenden Punkte, wobei das Signifikanzschema zumindest einer Merkmalskombination mit der Zeit angepasst wird in Abhängigkeit von der Häufigkeit und dem Erfolg von Authentifizierungsversuchen unter Verwendung der entsprechenden Merkmalskombination.
15. Verfahren nach Punkt 14, wobei im Fall, dass sich das der Merkmalskombination zugeordnete Vertrauensniveau durch die Anpassung des Signifikanzschemas soweit erhöht, dass es in eine neue Vertrauensklasse fällt, eine neue Merkmalskombination erstellt wird, wobei aus der Merkmalskombination mit erhöhtem Vertrauensniveau zumindest ein Merkmal gestrichen wird, sodass das Vertrauensniveau in die bisherige Vertrauensklasse fällt.
16. Verfahren nach einem der vorhergehenden Punkte, wobei den Merkmalskombinationen ferner jeweils zumindest ein Schwellenwert zugeordnet ist, wobei der Schwellenwert einen für das Vertrauensniveau zu erreichenden Authentisierungsgrad definiert, wobei der Authentisierungsgrad den Grad der Übereinstimmung zwischen den Referenzwerten der Merkmale einer Merkmalskombination und den für eine Authentifizierung erfassten Messwerten für die nachzuweisenden Merkmale bestimmt.
17. Verfahren nach Punkt 16, wobei für zumindest eine der Merkmalskombinationen zumindest ein Zusatzmerkmal festgelegt ist für den Fall, dass ein sich aus den für eine Authentifizierung erfassten Messwerten ergebende Wert den Schwellenwert nicht überschreitet.
18. Verfahren nach einem der Punkte 16 bis 17, wobei für zumindest eine der Merkmalskombinationen zumindest eine Ersatzmerkmalskombination festgelegt ist für den Fall, dass ein sich aus den für eine Authentifizierung erfassten Messwerten ergebende Wert den Schwellenwert nicht überschreitet
19. Verfahren nach Punkt 18, wobei das der Ersatzmerkmalskombination zugeordnete Vertrauensniveau identisch mit dem Vertrauensniveau der Merkmalskombination ist, für welche der Schwellenwert nicht überschritten wurde.
20. Verfahren nach Punkt 18, wobei das der Ersatzmerkmalskombination zugeordnete Vertrauensniveau höher als das Vertrauensniveau der Merkmalskombination ist, für welche der Schwellenwert nicht überschritten wurde.
21. Verfahren nach einem der vorhergehenden Punkte, wobei es sich bei der Datenbank um eine Blockchain handelt.
22. Verfahren nach einem der vorhergehenden Punkte, wobei die gespeicherten Daten durch eine Verschlüsselung kryptographisch gesichert sind.
23. Verfahren nach Punkt 22, wobei die gespeicherten Daten durch eine digitale Signatur kryptographisch gesichert sind.
24. Verfahren nach einem der vorhergehenden Punkte, wobei das Verfahren ferner umfasst:
   - Abfragen von Messwerten der für die Authentifizierung nachzuweisenden Merkmale der ausgewählten Merkmalskombination,
   - Empfangen der abgefragten Messwerte,
   - Vergleichen der empfangenen Messwerte mit den Referenzwerten der ausgewählten Merkmalskombination,
   - Bestimmen eines Authentifizierungsgrads des Nutzers unter Verwendung des Grads der Übereinstimmungen zwischen den Messwerten und den Referenzwerten,
   - falls der bestimmte Authentifizierungsgrad über dem der Merkmalskombination zugeordneten Schwellenwert liegt, Erzeugen und Senden eines Authentifizierungstokens zur Bestätigung einer erfolgreichen Authentifizierung des Nutzers.
25. Verfahren nach Punkt 24, wobei das Authentisierungstoken den bestimmten Authentifizierungsgrad angibt.
26. Verfahren nach einem der vorhergehenden Punkte, wobei ein dem Nutzer zugeordnetes Nutzer-Computersystem die Datenbank umfasst.
27. Verfahren nach einem der Punkte 1 bis 25, wobei ein einem Authentifizierungsdienst zugeordnetes Authentifizierungsdienst-Computersystem die Datenbank umfasst.
28. Verfahren nach Punkt 26, wobei das Nutzer-Computersystem die Merkmalskombinationen extrahiert.
29. Verfahren nach einem der Punkte 27, wobei das Authentifizierungsdienst-Computersystem die Merkmalskombinationen extrahiert.
30. Verfahren nach einem der vorhergehenden Punkte, wobei die ausgewählte Merkmalskombination einem die Authentifizierung ausführenden Computersystem in kryptographisch gesicherter Form zur Verfügung gestellt wird.
31. Computersystem, welches konfiguriert ist zum Ausführen eines Verfahren nach einem der Punkte 1 bis 30.

### Bezugszeichenliste

- 100: Mobiles Kommunikationssystem
- 110: Speicher
- 112: geschützter Speicherbereich
- 114: privater Schlüssel
- 115: Datenbank
- 116: Referenzwerte
- 117: Merkmalskombinationen
- 118: Zertifikat
- 119: Daten
- 120: Prozessor
- 121: Vertrauensniveau
- 122: Kryptographisches Protokoll
- 124: Instruktionen zur Nutzerauthentifizierung
- 125: Instruktionen zur Geräteauthentifizierung
- 130: Sensor
- 140: Schnittstelle
- 200: Sensorgerät
- 210: Speicher
- 212: geschützter Speicherbereich
- 214: Privater Schlüssel
- 218: Zertifikat
- 220: Prozessor
- 222: Kryptographisches Protokoll
- 224: Instruktionen zur Geräteauthentifizierung
- 230: Sensor
- 240: Schnittstelle
- 250: Netzwerk
- 300: Computersystem
- 310: Speicher
- 312: geschützter Speicherbereich
- 314: Privater Schlüssel
- 318: Zertifikat
- 320: Prozessor
- 322: Kryptographisches Protokoll
- 324: Instruktionen zur Geräteauthentifizierung
- 340: Schnittstelle
- 400: Nutzer
- 500: Authentifizierungsdienst-Computersystem
- 510: Speicher
- 512: geschützter Speicherbereich
- 514: privater Schlüssel
- 518: Zertifikat
- 520: Prozessor
- 522: Kryptographisches Protokoll
- 524: Instruktionen zur Nutzerauthentifizierung
- 525: Instruktionen zur Geräteauthentifizierung
- 540: Schnittstelle
- 615: Datenbank
- 616: Referenzwerte
- 617: Merkmalskombinationen
- 619: Daten
- 621: Vertrauensniveau

## Patentansprüche

1. Verfahren zum Erstellen einer Datenbank (115, 615) für eine dynamische Multifaktorauthentifizierung eines Nutzers (400), wobei das Verfahren umfasst:
• initiale Registrierung des Nutzers (400) gegenüber einem Authentifizierungsdienst, welcher die Datenbank (115, 615) verwaltet,
• Anmelden von Sensorgeräten (200) von welchen Daten (119, 619) für den Authentifizierungsdienst erfasst und in der Datenbank (115, 615) als Grundlage für eine dynamische Multifaktorauthentifizierung gesammelt werden,
• Empfang kryptographisch gesicherter Daten (119, 619) von den Sensorgeräten (200),
• kryptographisch gesichertes Speichern der Daten (119, 619) in der Datenbank (115, 615),
• Extrahieren von Merkmalskombinationen (117, 617) und von den Merkmalen der Merkmalskombination (117, 617) zugeordneten Referenzwerten (116, 616) aus den gespeicherten Daten (119, 619), welche für den Nutzer (400) charakteristisch sind,
• Zuordnen von Vertrauensniveaus (121, 621) zu den einzelnen Merkmalskombinationen (117, 617) basierend auf einer statistischen Wahrscheinlichkeit dafür, dass ein anderer Nutzer (400) eine identische Merkmalskombination (117, 617) mit identischen Referenzwerten (116, 616) aufweist,
• auf einen Empfang einer Authentifizierungsanfrage hin dynamische Auswahl einer Merkmalskombination (117, 617), welche der Nutzer (400) für eine erfolgreiche Authentifizierung nachzuweisen hat, unter Verwendung der den Merkmalkombinationen zugeordneten Vertrauensniveaus (121, 621).

2. Verfahren nach Anspruch 1, wobei bei zumindest einem der Merkmale der zugeordnete Referenzwert (116, 616), in Abhängigkeit von der Merkmalskombination (117, 617), in welcher das entsprechende Merkmal zur Authentifizierung des Nutzers (400) verwendet wird, variiert.

3. Verfahren nach einem der vorhergehenden Ansprüche, wobei den Merkmalskombinationen (117, 617) ferner jeweils ein Signifikanzschema zugeordnet ist, welches einzelnen Merkmalen der jeweiligen Merkmalskombination (117, 617) jeweils einen Signifikanzwert zuweist.

4. Verfahren nach Anspruch 3, wobei bei zumindest einem der Merkmale der zugewiesene Signifikanzwert, in Abhängigkeit von der Merkmalskombination (117, 617), in welcher das entsprechende Merkmal zur Authentifizierung des Nutzers (400) verwendet wird, variiert und/oder
wobei die Zuordnung der Vertrauensniveaus (121, 621) unter Verwendung der Signifikanzwerte der Merkmale der jeweiligen Merkmalskombination (117, 617) erfolgt.

5. Verfahren nach einem der vorhergehenden Ansprüche, wobei das Vertrauensniveau (121, 621) unter Verwendung von zuvor innerhalb eines vorgegebenen Zeitraums erfolgten Authentifizierungsversuchen bestimmt wird, und/oder wobei zumindest eine der Merkmalskombinationen (117, 617) auf Basis der statistischen Häufigkeit, mit welcher Merkmale in der entsprechenden Kombination in der Vergangenheit für den Nutzer (400) erfasst wurden, erstellt wird und/oder wobei es sich bei zumindest einem der Referenzwerte (116, 616) um einen Erwartungswert handelt, welcher auf Basis eines dem Nutzer (400) zugeordneten prädiktiven Modells bestimmt wurde, und/oder
wobei die Anzahl an Merkmalen je Merkmalskombination (117, 617) mindestens drei beträgt.

6. Verfahren nach einem der vorhergehenden Ansprüche, wobei die Vertrauensniveaus (121, 621) in Vertrauensklassen unterteilt sind und die Auswahl der Merkmalskombination (117, 617) aus den Merkmalskombinationen (117, 617) einer für die Authentifizierungsanfrage verwendeten Vertrauensklasse zufällig erfolgt oder wobei die Datenbank (115, 615) vordefinierte Merkmalskombinationen (117, 617) für einen vorbestimmten Kontextzusammenhang einer Authentifizierung festlegt.

7. Verfahren nach einem der vorhergehenden Ansprüche, wobei das Signifikanzschema zumindest einer Merkmalskombination (117, 617) mit der Zeit angepasst wird in Abhängigkeit von der Häufigkeit und dem Erfolg von Authentifizierungsversuchen unter Verwendung der entsprechenden Merkmalskombination (117, 617).

8. Verfahren nach Anspruch 7, wobei im Fall, dass sich das der Merkmalskombination (117, 617) zugeordnete Vertrauensniveau (121, 621) durch die Anpassung des Signifikanzschemas soweit erhöht, dass es in eine neue Vertrauensklasse fällt, eine neue Merkmalskombination (117, 617) erstellt wird, wobei aus der Merkmalskombination (117, 617) mit erhöhtem Vertrauensniveau (121, 621) zumindest ein Merkmal gestrichen wird, sodass das Vertrauensniveau (121, 621) in die bisherige Vertrauensklasse fällt.

9. Verfahren nach einem der vorhergehenden Ansprüche, wobei den Merkmalskombinationen (117, 617) ferner jeweils zumindest ein Schwellenwert zugeordnet ist, wobei der Schwellenwert einen für das Vertrauensniveau (121, 621) zu erreichenden Authentisierungsgrad definiert, wobei der Authentisierungsgrad den Grad der Übereinstimmung zwischen den Referenzwerten (116, 616) der Merkmale einer Merkmalskombination (117, 617) und den für eine Authentifizierung erfassten Messwerten für die nachzuweisenden Merkmale bestimmt.

10. Verfahren nach Anspruch 9, wobei für zumindest eine der Merkmalskombinationen (117, 617) zumindest ein Zusatzmerkmal festgelegt ist für den Fall, dass ein sich aus den für eine Authentifizierung erfassten Messwerten ergebende Wert den Schwellenwert nicht überschreitet.

11. Verfahren nach einem der Ansprüche 9 oder 10, wobei für zumindest eine der Merkmalskombinationen (117, 617) zumindest eine Ersatzmerkmalskombination festgelegt ist für den Fall, dass ein sich aus den für eine Authentifizierung erfassten Messwerten ergebende Wert den Schwellenwert nicht überschreitet

12. Verfahren nach Anspruch 11, wobei das der Ersatzmerkmalskombination zugeordnete Vertrauensniveau (121, 621) identisch mit dem Vertrauensniveau (121, 621) der Merkmalskombination (117, 617) ist, für welche der Schwellenwert nicht überschritten wurde, oder
wobei das der Ersatzmerkmalskombination zugeordnete Vertrauensniveau höher als das Vertrauensniveau (121, 621) der Merkmalskombination (117, 617) ist, für welche der Schwellenwert nicht überschritten wurde.

13. Verfahren nach einem der vorhergehenden Ansprüche, wobei es sich bei der Datenbank (115, 615) um eine Blockchain handelt.

14. Verfahren nach einem der vorhergehenden Ansprüche, wobei das Verfahren ferner umfasst:
• Abfragen von Messwerten der für die Authentifizierung nachzuweisenden Merkmale der ausgewählten Merkmalskombination (117, 617),
• Empfangen der abgefragten Messwerte,
• Vergleichen der empfangenen Messwerte mit den Referenzwerten (116, 616) der ausgewählten Merkmalskombination (117, 617),
• Bestimmen eines Authentifizierungsgrads des Nutzers (400) unter Verwendung des Grads der Übereinstimmungen zwischen den Messwerten und den Referenzwerten (116, 616),
• falls der bestimmte Authentifizierungsgrad über dem der Merkmalskombination (117, 617) zugeordneten Schwellenwert liegt, Erzeugen und Senden eines Authentifizierungstokens zur Bestätigung einer erfolgreichen Authentifizierung des Nutzers (400).

15. Computersystem, welches konfiguriert ist zum Ausführen eines Verfahren nach einem der Ansprüche 1 bis 14.

## Claims

1. A method for creating a database (115, 615) for a dynamic multi-factor authentication of a user (400), wherein the method comprises the steps:
• the user (400) is firstly registered to an authentication service which manages the database (115, 615),
• sensor devices (200) are logged on and capture data (119, 619) for the authentication service, said data being collected in the database (115, 615) as the basis for a dynamic multi-factor authentication,
• cryptographically secured data (119, 619) are received from the sensor devices (200),
• the data (116, 619) are stored in the database (115, 615) in a cryptographically secured manner,
• combinations of features (117, 617) and reference values (116, 616) associated with the features of the combination of features (117, 617) which are characteristic for the user (400) are extracted from the stored data (119, 619),
• trust levels (121, 621) are assigned to the individual combinations of features (117, 617) on the basis of a statistical likelihood that another user (400) has an identical combination of features (117, 617) with identical reference values (116, 616),
• upon receipt of an authentication request, a combination of features (117, 617) which the user (400) has to demonstrate for a successful authentication is dynamically selected with use of the trust levels (121, 621) assigned to the combinations of features.

2. The method according to claim 1, wherein, in the case of at least one of the features, the assigned reference value (116, 616) varies depending on the combination of features (117, 617) in which the corresponding feature is used for authentication of the user (400).

3. The method according to either one of the preceding claims, wherein each combination of features (117, 617) is also assigned its own significance schema, which allocates a significance value to individual features of the particular combination of features (117, 617).

4. The method according to claim 3, wherein, in the case of at least one of the features, the allocated significance value varies depending on the combination of features (117, 617) in which the corresponding feature is used for authentication of the user (400), and/or
wherein the trust levels (121, 621) are assigned with use of the significance values of the features of the particular combination of features (117, 617).

5. The method according to any one of the preceding claims, wherein the trust level (121, 621) is determined with use of authentication attempts performed previously within a predefined period of time, and/or
wherein at least one of the combinations of features (117, 617) is created on the basis of the statistical frequency with which features in the corresponding combination were captured in the past for the user (400), and/or
wherein at least one of the reference values (116, 616) is an expected value, which was determined on the basis of a predictive model assigned to the user (400), and/or
wherein the number of features per combination of features (117, 617) is at least three.

6. The method according to any one of the preceding claims, wherein the trust levels (121, 621) are divided into trust classes and the combination of features (117, 617) is selected randomly from the combinations of features (117, 617) of a trust class used for the authentication query, or wherein the database (115, 615) establishes predefined combinations of features (117, 617) for a predetermined context of an authentication.

7. The method according to any one of the preceding claims, wherein the significance schema of at least one combination of features (117, 617) is adapted over time depending on the frequency and the success of authentication attempts with use of the corresponding combination of features (117, 617).

8. The method according to claim 7, wherein, in the case that the trust level (121, 621) assigned to the combination of features (117, 617) increases by the adaptation of the significance schema to such an extent that it falls into a new trust class, a new combination of features (117, 617) is created, wherein at least one feature is deleted from the combination of features (117, 617) with increased trust level (121, 621), and therefore the trust level (121, 621) falls into the previous trust class.

9. The method according to any one of the preceding claims, wherein the combinations of features (117, 617) are also assigned at least one threshold value each, wherein the threshold value defines a degree of authentication to be reached for the trust level (121, 621), wherein the degree of authentication determines the degree of conformity between the reference values (116, 616) of the features of a combination of features (117, 617) and the measured values for the features to be demonstrated, said measured values having been captured for an authentication.

10. The method according to claim 9, wherein, for at least one of the combinations of features (117, 617), at least one additional feature is defined for the case in which a value resulting from the measured values captured for an authentication does not exceed the threshold value.

11. The method according to either one of claims 9 or 10, wherein, for at least one of the combinations of features (117, 617), at least one combination of replacement features is determined for the case in which a value resulting from the measured values captured for an authentication does not exceed the threshold value.

12. The method according to claim 11, wherein the trust level (121, 621) assigned to the combination of replacement features is identical to the trust level (121, 621) of the combination of features (117, 617) for which the threshold value was not exceeded, or
wherein the trust level assigned to the combination of replacement features is higher than the trust level (121, 621) of the combination of features (117, 617) for which the threshold value was not exceeded.

13. The method according to any one of the preceding claims, wherein the database (115, 615) is a blockchain.

14. The method according to any one of the preceding claims, wherein the method also comprises the steps:
• measured values of the features of the selected combination of features (117, 617) that are to be demonstrated for the authentication are requested,
• the requested measured values are received,
• the received measured values are compared with the reference values (116, 616) of the selected combination of features (117, 617),
• a degree of authentication of the user (400) is determined with use of the degree of conformity between the measured values and the reference values (116, 616),
• if the determined degree of authentication lies above the threshold value associated with the combination of features (117, 617), an authentication token for confirming a successful authentication of the user (400) is generated and sent.

15. A computer system which is configured to carry out a method according to any one of claims 1 to 14.

## Revendications

1. Procédé de création d'une banque de données (115, 615) pour une authentification multifactorielle dynamique d'un utilisateur (400, le procédé comprenant :
• l'enregistrement initial de l'utilisateur (400), vis-à-vis d'un service d'authentification, lequel gère la banque de données (115, 615),
• l'inscription d'appareils de détection (200) par lesquels des données (119, 619) sont saisies pour le service d'authentification et sont collectées dans la banque de données (115, 615) en tant que bases pour une authentification multifactorielle dynamique,
• la réception de données (119, 619) sécurisées par cryptographie à partir des appareils de détection (200),
• le stockage sécurisé par cryptographie des données (119, 619) dans la banque de données (115, 615),
• l'extraction de combinaisons de caractéristiques (117, 617) et de valeurs de référence (116, 616) associées à la combinaison de caractéristiques (117, 617) par les caractéristiques à partir des données (119, 619) stockées, lesquelles sont spécifiques à l'utilisateur (400),
• l'attribution d'un niveau de confiance (121, 621) aux combinaisons de caractéristiques (117, 617) individuelles sur la base de leur probabilité statistique qu'un autre utilisateur (400) présente une combinaison de caractéristiques (117, 617) identique avec des valeurs de référence (116, 616) identiques,
• suite à une réception d'une demande d'authentification, la sélection dynamique d'une combinaison de caractéristiques (117, 617) laquelle l'utilisateur (400) doit indiquer pour une authentification réussie, moyennant l'emploi du niveau de confiance (121, 621) associé à la combinaison de caractéristiques.

2. Procédé selon la revendication 1, dans lequel, pour au moins une des caractéristiques, la valeur de référence (116, 616) associée varie en fonction de la combinaison de caractères (117, 617) dans laquelle le caractère en question est employé pour l'authentification de l'utilisateur (400).

3. Procédé selon l'une des revendications précédentes, dans lequel en outre un schéma de signification est associé chaque fois aux combinaisons de caractères (117, 617), lequel attribue respectivement une valeur de signification à des caractéristiques individuelles de la combinaison de caractéristiques (117, 617) respective.

4. Procédé selon la revendication 3, dans lequel, pour au moins une des caractéristiques, la valeur de signification associée varie en fonction de la combinaison de caractères (117, 617) dans laquelle la caractéristique en question est employée pour l'authentification de l'utilisateur (400), et/ou
dans lequel l'attribution du niveau de confiance (121, 621) a lieu moyennant l'emploi des valeurs de signification de la combinaison de caractéristiques (117, 617) en question.

5. Procédé selon l'une des revendications précédentes, dans lequel le niveau de confiance (121, 621) est déterminé moyennant l'emploi d'essais d'authentification ayant eu lieu en l'espace d'un intervalle de temps prédéfini, et/ou dans lequel au moins l'une des combinaisons de caractéristiques (117, 617) est établie sur la base de la probabilité statistique avec laquelle des caractéristiques ont été saisies dans la combinaison correspondante dans le passé pour l'utilisateur (400), et/ou
dans lequel il s'agit pour au moins une des valeurs de référence (116, 616) d'une valeur attendue, laquelle a été déterminée sur la base d'un modèle de prédiction associé à l'utilisateur (400), et/ou
dans lequel le nombre est d'au moins trois caractéristiques par combinaison de caractéristiques (117, 617).

6. Procédé selon l'une des revendications précédentes, dans lequel le niveau de confiance (121, 621) est subdivisé en classes de confiance et la sélection de la combinaison de caractéristiques (117, 617) d'une classe de confiance employée pour la demande d'authentification a lieu de manière aléatoire ou dans lequel la banque de données (115, 615) fixe des combinaisons de caractéristiques (117, 617) prédéfinies pour une relation contextuelle prédéterminée d'une authentification.

7. Procédé selon l'une des revendications précédentes, dans lequel le schéma de signification d'au moins une combinaison de caractéristiques (117, 617) est ajusté au temps en fonction de la fréquence et de la réussite d'essais d'authentification moyennant l'emploi de la combinaison de caractéristiques (117, 617) adéquate.

8. Procédé selon la revendication 7, dans lequel, dans le cas où le niveau de confiance (121, 621) associé à la combinaison de caractéristiques (117, 617) s'élève à un tel point par l'adaptation du schéma de signification qu'il tombe dans une nouvelle classe de confiance, une nouvelle combinaison de caractéristiques (117, 617) est établie, où au moins une caractéristique est enlevée de la combinaison de caractères (117, 617) avec le niveau de confiance (121, 621) élevé de sorte que le niveau de confiance (121, 621) tombe dans la classe de confiance précédente.

9. Procédé selon l'une des revendications précédentes, dans lequel en outre au moins une valeur de seuil est associée à chacune des combinaisons de caractéristiques (117, 617), où la valeur de seuil définit un degré d'authentification à atteindre pour le niveau de confiance (121, 621), où le degré d'authentification détermine le degré de la concordance entre les valeurs de référence (116, 616) des caractéristiques d'une combinaison de caractères (117, 617) et les valeurs de mesure saisies pour l'authentification pour les caractéristiques à renseigner.

10. Procédé selon la revendication 9, dans lequel au moins une caractéristique supplémentaire est établie pour au moins une des combinaisons de caractères (117, 617) pour le cas où la valeur donnée pour une authentification de valeurs de mesure saisies ne dépasse pas la valeur de seuil.

11. Procédé selon l'une des revendications 9 ou 10, dans lequel au moins une combinaison de caractéristiques de rechange est fixée pour au moins une des combinaisons de caractères (117, 617) pour le cas où une valeur donnée pour une authentification de valeurs de mesure saisies ne dépasse pas la valeur de seuil.

12. Procédé selon la revendication 11, dans lequel le niveau de confiance (121, 621) associé à la combinaison de caractéristiques de rechange est identique au niveau de confiance (121, 621) de la combinaison de caractères (117, 617) pour laquelle la valeur de seuil n'a pas été dépassée, ou
dans lequel le niveau de confiance associé à la combinaison de caractères de rechange est plus élevé que le niveau de confiance (121, 621) de la combinaison de caractères (117, 617) pour laquelle la valeur de seuil n'a pas été dépassée.

13. Procédé selon l'une des revendications précédentes, dans lequel il s'agit d'une chaîne de blocs dans le cas de la banque de données (115, 615).

14. Procédé selon l'une des revendications précédentes, où le procédé comprend en outre :
• la demande de valeurs de mesure des caractéristiques de la combinaison de caractères (117, 617) sélectionnée à renseigner pour l'authentification,
• la réception des valeurs de mesures demandées,
• la comparaison des valeurs de mesure reçues avec les valeurs de référence (116, 616) de la combinaison de caractères (117, 617) sélectionnée,
• la détermination d'un degré d'authentification de l'utilisateur (400), moyennant l'emploi du degré de concordance entre les valeurs de mesure et les valeurs de référence (116, 616),
• dans le cas où le degré d'authentification déterminé se situe au-dessus de la valeur de seuil associée à la combinaison de caractères (117, 617), la création et l'envoi d'un jeton d'identification pour la confirmation d'une authentification réussie de l'utilisateur (400).

15. Système informatique, lequel est configuré pour l'exécution d'un procédé selon l'une des revendications 1 à 14.
